# EUROPÄISCHE PATENTSCHRIFT

(11) **EP 3 823 921 B1**
(45) Veröffentlichungstag und Bekanntmachung des Hinweises auf die Patenterteilung: **19.10.2022**
(21) Anmeldenummer: 19734420.3
(22) Anmeldetag: 04.07.2019
(51) Int. Cl.: B66B 25/00

(54) **VERFAHREN UND VORRICHTUNG ZUM ÜBERWACHEN EINES ZUSTANDS EINER PERSONENTRANSPORTANLAGE UNTER VERWENDUNG EINES DIGITALEN DOPPELGÄNGERS**
METHOD AND DEVICE FOR MONITORING A CONDITION OF A PERSON TRANSPORT ASSEMBLY THROUGH THE USE OF A DIGITAL DOPPELGÄNGER
PROCÉDÉ ET DISPOSITIF DE SURVEILLANCE D'UN ÉTAT D'UNE INSTALLATION DE TRANSPORT DE PERSONNES AU MOYEN D'UN DOUBLE NUMÉRIQUE

(30) Priorität: 19.07.2018 EP 18184372
(43) Veröffentlichungstag der Anmeldung: 26.05.2021
(73) Patentinhaber: INVENTIO AG, 6052 Hergiswil (CH)
(72) Erfinder: DRAHOHS-FÖDERLER, Andreas, 2721 Bad Fischau-Brunn (AT); BLONDIAU, Dirk Mark, 1170 Wien (AT); PRAXMARER, Dominik, 1110 Wien (AT); STOIBER, Gerhard, 2225 Zistersdorf (AT); SCHMIED, Herbert, 3430 Tulln (AT); ORTBAUER, Martin, 1090 Wien (AT); SCHÜTZ, Richard, 1100 Wien (AT); NOVACEK, Thomas, 2320 Schwechat (AT); WU, Yixin, 1130 Wien (AT)
(74) Vertreter: Inventio AG
(86) Internationale Anmeldenummer: PCT/EP2019/067929
(87) Internationale Veröffentlichungsnummer: WO 2020/016016

(56) Entgegenhaltungen:
- CN-A- 106 586 796
- US-A1- 2018 148 298
- FEI TAO ET AL: "Digital twin-driven product design, manufacturing and service with big data", THE INTERNATIONAL JOURNAL OF ADVANCED MANUFACTURING TECHNOLOGY, Bd. 94, Nr. 9-12, 16. März 2017 (2017-03-16), Seiten 3563-3576, XP055547858, London ISSN: 0268-3768, DOI: 10.1007/s00170-017-0233-1

## Beschreibung

Die vorliegende Erfindung betrifft ein Verfahren und eine Vorrichtung zum Überwachen von Eigenschaften einer Personentransportanlage die als Fahrtreppe oder Fahrsteig ausgestaltet ist. Ferner betrifft die Erfindung eine mit einer vorgeschlagenen Vorrichtung ausgestattete Personentransportanlage, ein zur Durchführung des vorgeschlagenen Verfahrens ausgebildetes Computerprogrammprodukt sowie ein dieses Computerprogrammprodukt speicherndes computerlesbares Medium.

Personentransportanlagen in Form von Fahrtreppen oder Fahrsteigen dienen dazu, Personen innerhalb von Gebäuden oder Bauwerken zu befördern. Dabei muss stets eine ausreichende Betriebssicherheit, aber auch eine möglichst durchgängige Verfügbarkeit gewährleistet sein. Hierfür werden Personentransportanlagen herkömmlich meist in regelmäßigen Intervallen kontrolliert und/oder gewartet. Die Intervalle werden dabei in der Regel basierend auf Erfahrungen mit ähnlichen Personentransportanlagen festgelegt, wobei die Intervalle zur Wahrung der Betriebssicherung ausreichend kurz gewählt werden müssen, so dass rechtzeitig vor Eintritt etwaiger sicherheitsgefährdender Betriebsbedingungen eine Kontrolle bzw. Wartung durchgeführt wird.

Bei älteren Personentransportanlagen werden die Kontrollen dabei meist völlig unabhängig vom tatsächlichen aktuellen Zustand der Personentransportanlage durchgeführt. Das heißt, ein Techniker muss die Personentransportanlage besuchen und vor Ort inspizieren. Häufig wird dabei erkannt, dass keinerlei Wartung dringend notwendig ist. Der Besuch des Technikers stellt sich somit als überflüssig heraus und verursacht unnötige Kosten. Andererseits wird für den Fall, dass der Techniker tatsächlich Wartungsbedarf erkennt, in vielen Fällen eine weitere Anfahrt erforderlich, da der Techniker erst vor Ort feststellen kann, welche Komponenten der Personentransportanlage einer Wartung bedürfen, und somit erst vor Ort ersichtlich wird, dass für eine Wartung bzw. Reparatur beispielsweise Ersatzteile oder spezielle Werkzeuge benötigt werden. Ein weiteres Problem besteht darin, dass nach ein paar Jahren - insbesondere wenn die Wartung von Drittfirmen durchgeführt wird - die Anlage nicht mehr durchgehend technisch dokumentiert ist und es ist nur vor Ort feststellbar, welche Komponenten original sind und welche Komponenten durch Drittprodukte ersetzt worden sind, da es in dieser Branche sehr viele Anbieter ausschließlich für Ersatzteile und für die Wartung gibt.

Bei neueren Personentransportanlagen besteht teilweise bereits eine Möglichkeit, beispielsweise mithilfe von Sensoren und/oder durch ein Überwachen von deren aktiven Komponenten, das heißt zum Beispiel durch ein Überwachen eines Betriebs eines Transportbandes der Personentransportanlage, vorab und/oder von einem externen Kontrollzentrum aus Hinweise darüber zu erhalten, dass sich ein Zustand der Personentransportanlage verändert hat und dies eine Kontrolle bzw. Wartung der Personentransportanlage notwendig erscheinen lässt. Hierdurch können Wartungsintervalle gegebenenfalls verlängert bzw. bedarfsgerecht angepasst werden. Allerdings sind üblicherweise mehrere Sensoren erforderlich, die eine erhebliche Mehrinvestition bedeuten. Des Weiteren kann die zusätzliche Sensorik zu einer erhöhten Störanfälligkeit führen. Zudem kann auch in diesem Fall ein Techniker meist erst durch einen Besuch vor Ort erkennen, ob tatsächlich ein Wartungsbedarf besteht und ob eventuell Ersatzteile oder spezielle Werkzeuge benötigt werden. Auch bei diesen Anlagen kann je nach Wartungsanbieter nach einer gewissen Zeit nicht mehr eine durchgehende technische Dokumentation erwartet werden. Bekannt ist eine System zur Überwachung eines Aufzuges aus Dokument US2018/0148298A1. Hierbei werden mittels Mikrofone Geräuschsequenzen aufgenommen und diese in der Datenbank einer Signalverarbeitungseinheit gespeichert. Die gespeicherten Geräuschsequenzen werden hernach anhand von Vergleichssequenzen beurteilt, indem durch Vergleich mit einer zugeordneten Vergleichssequenz abweichende Signalmuster der aufgenommenen Geräuschsequenzen eruiert und bewertet werden. Die Zuordnung der richtigen Vergleichssequenz erfolgt über das Startereignis, das den Aufnahmebeginn der Geräuschsequenz markiert und ebenfalls in der Vergleichssequenz vorhanden ist.

Es kann unter anderem ein Bedarf an einem Verfahren oder einer Vorrichtung bestehen, mithilfe derer eine Überwachung von Eigenschaften einer Personentransportanlage effizienter, einfacher, mit weniger Aufwand, ohne eine Notwendigkeit einer Inspektion vor Ort und/oder besser prognostizierbar durchgeführt werden kann. Ferner kann ein Bedarf an einer entsprechend ausgerüsteten Personentransportanlage, einem Computerprogrammprodukt zum Durchführen des Verfahrens auf einer programmierbaren Vorrichtung sowie einem computerlesbaren Medium mit einem darauf gespeicherten, solchen Computerprogrammprodukt bestehen.

Einem solchen Bedarf kann durch den Gegenstand gemäß einem der unabhängigen Ansprüche entsprochen werden. Vorteilhafte Ausführungsformen sind in den abhängigen Ansprüchen sowie der nachfolgenden Beschreibung definiert.

Gemäß einem ersten Aspekt der Erfindung wird ein Verfahren zum Überwachen eines Zustands einer physischen Personentransportanlage unter Verwendung eines Aktualisierter-Digitaler-Doppelgänger-Datensatzes vorgeschlagen. Dieser umfasst die charakterisierenden Eigenschaften von Bauteilen der physischen Personentransportanlage in maschinen-verarbeitbarer Weise. Der Aktualisierter-Digitaler-Doppelgänger-Datensatz ist aus Bauteilmodell-Datensätzen aufgebaut die Daten umfassen, welche durch Messen charakterisierender Eigenschaften an der physischen Personentransportanlage nach deren Zusammenbau und Installation in einem Bauwerk ermittelt wurden. Nachfolgend wird der Aktualisierter-Digitaler-Doppelgänger-Datensatz der besseren Lesbarkeit wegen durchgehend in abgekürzter Form als "ADDD" bezeichnet.

Ferner weist die physische Personentransportanlage ein umlaufend angeordnetes Transportband und mindestens eine Erfassungseinrichtung auf, wobei die Erfassungseinrichtung ein Belastungsprofil des Transportbandes während des Betriebes der Personentransportanlage erfasst. Dieses Belastungsprofil wird als Messdaten auf den ADDD übertragen und unter Verwendung eines Regelsatzes werden charakterisierende Eigenschaften der von den übertragenen Messdaten betroffenen Bauteilmodell-Datensätze neu ermittelt. Anschließend werden die charakterisierenden Eigenschaften der betroffenen Bauteilmodell-Datensätze mit den neu ermittelten, charakterisierenden Eigenschaften aktualisiert.

Das heißt, dass dem Verfahren die Erfahrung zugrunde liegt, dass beim Betrieb ein vom Belastungsprofil abhängiger Verschleiß insbesondere an bewegten Komponenten der Personentransportanlage entsteht und dieser Verschleiß mindestens eine charakterisierende Eigenschaft mindestens eines Bauteilmodell-Datensatzes verändert, beziehungsweise diese charakterisierende Eigenschaft des Bauteilmodell-Datensatzes entsprechend aktualisiert werden muss. Wie weiter unten in Zusammenhang mit den Figuren ausführlich er erklärt ist, betreffen die erfassten Veränderungen üblicherweise mehrere charakteristische Eigenschaften von mehreren Bauteilmodell-Datensätzen. Jede einzelne dieser charakteristischen Eigenschaften kann für einen betroffenen Bauteilmodell-Datensatz aus dem erfassten Belastungsprofil unter Zuhilfenahme eines Regelsatzes und der im Aktualisierter-Digitaler-Doppelgänger-Datensatz vorhandenen geometrischen Verhältnisse, den in den Bauteilmodell-Datensätzen hinterlegten physikalischen Eigenschaften sowie den bekannten Berechnungsmethoden aus den Gebieten der Physik, der Mechanik und der Festigkeitslehre errechnet werden. Die aufgrund des erfassten Belastungsprofils ermittelten charakterisierenden Eigenschaften ersetzen nun die entsprechenden, bisherigen charakterisierenden Eigenschaften der betroffenen Bauteilmodell-Datensätze, wodurch diese, beziehungsweise der Aktualisierter-Digitaler-Doppelgänger-Datensatz aktualisiert werden.

Danach können durch die Überwachung Veränderungen und Veränderungstrends der aktualisierten charakterisierenden Eigenschaften des umlaufend angeordneten Transportbandes und deren Einfluss auf die Bauteile des Transportbandes und auf die mit diesen Bauteilen in Interaktion stehenden Bauteile mittels des ADDD durch Berechnungen und/oder durch statische und dynamische Simulationen verfolgt und beurteilt werden.

Zur Beurteilung können den charakterisierenden Eigenschaften von Bauteilen zugeordnete Beurteilungskriterien wie beispielsweise eine maximale Kettenlängung von Förderketten, eine Obergrenze der Leistungsaufnahme der Antriebsmaschine, maximale und/oder minimale Abmaße bei Verschleißstellen und dergleichen mehr vorhanden sein. Diese erlauben einen einfachen Vergleich (statische Betrachtung) der veränderten charakterisierenden Eigenschaft und geben beispielsweise die maximal zulässigen Abweichungen ausgehend von Soll-Werten vor. Die charakterisierenden Eigenschaften von Bauteilen des Aktualisierter-Digitaler-Doppelgänger-Datensatzes können mit diesen Beurteilungskriterien verglichen werden. Ferner können durch statische Simulationen (beispielsweise mittels einer Finite-Elemente-Analyse die Festigkeitsabnahme infolge einer Materialabtragung durch Verschleiß) und dynamische Simulationen die Auswirkungen der veränderten charakterisierenden Eigenschaften auf das betreffende Bauteil und deren Auswirkung auf die mit diesem Bauteil in Interaktion stehenden Bauteile (beispielsweise erhöhte Bewegungsfreiheit beziehungsweise Spiel infolge des Verschleißes) beurteilt werden.

Gemäß einem zweiten Aspekt der Erfindung wird eine Vorrichtung zum Überwachen eines Zustands einer physischen Personentransportanlage vorgeschlagen. Diese umfasst einen aus Bauteilmodell-Datensätzen aufgebauter ADDD, welcher charakterisierende Eigenschaften von Bauteilen der physischen Personentransportanlage in einer tatsächlichen Konfiguration der physischen Personentransportanlage nach deren Zusammenbau und Installation in einem Bauwerk in maschinen-verarbeitbarer Weise wiedergibt. Zudem weist die Vorrichtung mindestens eine Erfassungseinrichtung auf, durch welche ein Belastungsprofil eines Transportbandes der Personentransportanlage während des Betriebes erfasst werden kann. Dieses Belastungsprofil kann als Messdaten zwecks Aktualisierung vorhandener Daten auf den ADDD übertragen werden, wobei unter Verwendung eines Regelsatzes charakterisierende Eigenschaften der von den übertragenen Messdaten betroffenen Bauteilmodell-Datensätze neu ermittelt werden können. Die betroffenen Bauteilmodell-Datensätze können hernach mit den neu ermittelten, charakterisierenden Eigenschaften aktualisiert werden.

Mittels statischer und dynamischer Simulationen am ADDD können die Veränderungen und Veränderungstrends der charakterisierenden Eigenschaften des umlaufend angeordneten virtuellen Transportbandes und deren Auswirkungen auf mit den virtuellen Bauteilen des Transportbandes in Interaktion stehenden, virtuellen Bauteile der Personentransportanlage verfolgt und beurteilt werden. Da die meisten charakterisierenden Eigenschaften der virtuellen Bauteile des ADDD unverändert bleiben und die aktualisierten charakterisierenden Eigenschaften aufgrund der herangezogenen Erfahrungswerte ein sehr exaktes Abbild der entsprechenden physischen Bauteile der physischen Personentransportanlage ergeben, sind die Berechnungen, Erkenntnisse und Beurteilungen zu den virtuellen Bauteilen auch nahezu 1:1 für die entsprechenden physischen Bauteile der physischen Personentransportanlage gültig.

Gemäß einem dritten Aspekt der Erfindung wird eine Personentransportanlage vorgeschlagen, welche eine Vorrichtung gemäß einer Ausführungsform des zweiten Aspekts der Erfindung umfasst.

Gemäß einem vierten Aspekt der Erfindung wird ein Computerprogrammprodukt vorgeschlagen, das maschinenlesbare Programmanweisungen umfasst, welche bei Ausführung auf einer programmierbaren Vorrichtung die Vorrichtung zum Durchführen oder Steuern eines Verfahrens gemäß einer Ausführungsform des ersten Aspekts der Erfindung veranlassen.

Gemäß einem fünften Aspekt der Erfindung wird ein computerlesbares Medium vorgeschlagen, auf dem ein Computerprogrammprodukt gemäß einer Ausführungsform des vierten Aspekts der Erfindung gespeichert ist.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Wie einleitend angemerkt, müssen Personentransportanlagen bisher meist vor Ort inspiziert werden, um erkennen zu können, ob tatsächlich eine Wartung bzw. Reparatur aktuell notwendig ist und, für den Fall, dass dies zutrifft, welche Maßnahmen konkret ergriffen werden müssen, das heißt zum Beispiel welche Ersatzteile und/oder Werkzeuge erforderlich sind.

Um dies zu umgehen wird vorgeschlagen, zur Überwachung von den aufgrund des Belastungsprofils ermittelten charakterisierenden Eigenschaften einen ADDD zu verwenden. Der ADDD soll dabei Daten umfassen, welche charakterisierende Eigenschaften der die Personentransportanlage bildenden Bauteile charakterisieren und stellt in seiner Gesamtheit eine möglichst vollständige, digitale Abbildung der dem ADDD zugeordneten physischen Personentransportanlage dar. Dabei sollen die Daten des ADDD die Eigenschaften der Bauteile in ihrer tatsächlichen Konfiguration charakterisieren, das heißt in einer Konfiguration, in der die Bauteile vollständig fertiggestellt und dann zu der Personentransportanlage zusammengebaut und in einem Bauwerk installiert wurden. Ebenso werden dem Belastungsprofil entsprechende, betriebsbedingte Veränderungen auf den ADDD übertragen, so dass dieser auch über die Lebensdauer hinweg auf den aktuellen Stand der zugeordneten, physischen Personentransportanlage gebracht wird.

Mit anderen Worten geben die in dem ADDD enthaltenen Daten nicht lediglich Soll-Eigenschaften der Bauteile wieder, wie sie beispielsweise beim Planen, Konzipieren bzw. Kommissionieren der Personentransportanlage angenommen werden und wie sie beispielsweise aus hierbei verwendeten CAD-Daten betreffend die Bauteile entnommen werden können. Stattdessen sollen die in dem ADDD enthaltenen Daten die tatsächlichen Eigenschaften der in der fertig montierten und installierten Personentransportanlage verbauten Bauteile wiedergeben. Der ADDD kann somit als virtuelles Abbild der fertigen Personentransportanlage bzw. der darin enthaltenen Bauteile angesehen werden.

Die in dem ADDD enthaltenen Daten sollen dabei die charakterisierenden Eigenschaften der Bauteile ausreichend detailliert widerspiegeln, um daraus Aussagen über aktuelle strukturelle und/oder funktionelle Eigenschaften der physischen Personentransportanlage ableiten zu können. Insbesondere sollen anhand des ADDD Aussagen über aktuelle strukturelle und/oder funktionelle Eigenschaften, welche einen aktualisierten Zustand der gesamten Personentransportanlage charakterisieren, abgeleitet werden können, die für eine Beurteilung von deren aktueller oder zukünftiger Betriebssicherheit, deren aktueller oder zukünftiger Verfügbarkeit und/oder einer aktuellen oder zukünftigen Notwendigkeit für eine Wartung oder Reparatur herangezogen werden können.

Ein besonderer Vorteil ergibt sich aus der Verwendung des ADDD während der gesamten Lebensdauer der physischen Personentransportanlage. Wenn nämlich der ADDD weiterverwendet werden soll, wird eine durchgehende Dokumentation beziehungsweise Nachführung der Daten des ADDD erzwungen, da sonst die Betriebsüberwachung, die Wartungsvorhersagen und die Zustandsermittlungen auf fehlerhaften Daten beruhen. Das bedeutet, dass bei einem Ersatz von Bauteilen die charakterisierenden Eigenschaften der Ersatzteile digitalisiert erfasst werden müssen. Bei den Wartungsarbeiten werden im ADDD die charakterisierenden Eigenschaften der ausgebauten Bauteile durch die charakterisierenden Eigenschaften der Ersatzteile ersetzt. Ebenso sind allfällige Einstellungsmasse zu erfassen und auf den ADDD zu übertragen. Um den Monteuren die Arbeit zu erleichtern, können die Ausmessarbeiten der Bauteile und Einstellungsmasse durch optische Erfassungseinrichtungen wie beispielsweise ein Laserscanner oder eine TOF-Kamera (time of flight camera) auf der Baustelle erfasst werden. Deren Daten werden anschließend durch ein Verarbeitungsprogramm automatisch ausgewertet, für den ADDD aufbereitet und auf diesen übertragen.

Damit unterscheidet sich der ADDD beispielsweise von digitalen Daten, welche herkömmlich bei einer Herstellung von Personentransportanlagen erzeugt bzw. genutzt werden. Beispielsweise ist es üblich, bei einer Planung, Konzipierung bzw. Kommissionierung einer Personentransportanlage die dabei verwendeten Bauteile mithilfe von Computern und unter Verwendung von CAD- Programmen zu planen oder zu designen, sodass entsprechende CAD-Daten beispielsweise eine Soll-Geometrie eines Bauteils wiedergeben. Solche CAD-Daten geben jedoch nicht an, welche Geometrie ein gefertigtes Bauteil tatsächlich hat, wobei beispielsweise Fertigungstoleranzen oder Ähnliches dazu führen können, dass sich die tatsächliche Geometrie signifikant von der Soll-Geometrie unterscheidet.

Insbesondere geben herkömmlich verwendete Daten wie CAD-Daten nicht an, welche charakterisierenden Eigenschaften Bauteile angenommen haben, nachdem sie zu der Personentransportanlage zusammengebaut und in einem Bauwerk installiert wurden. Je nachdem, wie der Zusammenbau und die Installation durchgeführt wurden, können sich erhebliche Änderungen bei den charakterisierenden Eigenschaften der Bauteile im Vergleich zu deren ursprünglich entworfenen Soll-Eigenschaften und/oder im Vergleich zu deren Eigenschaften direkt nach deren Herstellung, aber vor deren Zusammenbau bzw. Installation, ergeben.

Der ADDD unterscheidet sich auch von Daten, wie sie herkömmlich teilweise während einer Fertigung von komplexen Werkstücken oder Maschinen verwendet werden. Beispielsweise wird in der DE 10 2015 217 855 A1 ein Verfahren zur Prüfung einer Konsistenz zwischen Referenzdaten eines Fertigungsobjektes und Daten eines sogenannten digitalen Zwillings des Fertigungsobjekts beschrieben. Dabei wird ein als digitaler Zwilling bezeichnetes digitales Abbild eines Werkstücks während der Fertigung mit dem Zustand des Werkstücks synchronisiert. Für den Produktionsablauf bedeutet dies, dass nach jedem Produktionsschritt die den digitalen Zwilling wiedergebenden Daten derart modifiziert werden, dass den durch den Produktionsschritt zu bewirkenden Änderungen von Eigenschaften des Werkstücks Rechnung getragen werden soll.

Beispielsweise kann vorgesehen sein, in einem Fertigungsschritt einen Bereich des Werkstücks durch Schleifen, Drehen oder Ähnliches gemäß Soll-Vorgaben abzutragen, sodass nach Durchführung des Fertigungsschritts auch der digitale Zwilling gemäß den Soll-Vorgaben modifiziert wird. Auf diese Weise soll der digitale Zwilling stets eine Information über den aktuellen Zwischenzustand des Werkstücks während dessen Fertigung liefern.

Allerdings ist gemäss der DE 10 2015 217 855 A1 insbesondere bei der Fertigung von Bauteilen für Personentransportanlagen nicht vorgesehen, in dem digitalen Zwilling Daten zu berücksichtigen, welche tatsächliche charakterisierende Eigenschaften der Bauteile wiedergeben, insbesondere tatsächliche charakterisierende Eigenschaften der Bauteile nach deren Zusammenbau zu einer fertigen Personentransportanlage und deren Installation im Bauwerk. Stattdessen beruhen die in dem digitalen Zwilling aufgenommenen Daten zumeist ausschließlich auf Soll-Eigenschaften wie sie beispielsweise in Form von CAD-Daten wiedergegeben werden können.

Um den Zustand einer Personentransportanlage hinreichend genau und/oder zuverlässig überwachen oder gegebenenfalls sogar prognostizieren zu können, wird nun vorgeschlagen, hierfür verwendbare Daten in Form des ADDD bereitzustellen. Der ADDD liefert dabei über bloße Soll-Eigenschaften hinausgehende, durchgehend oder periodisch mit der physischen Personentransportanlage abgeglichene und aktualisierte Informationen über die charakterisierenden Eigenschaften der in der Personentransportanlage verbauten Bauteile in ihrer tatsächlichen Konfiguration. Solche Informationen können vorteilhaft dazu verwendet werden, beispielsweise Abweichungen der tatsächlichen charakterisierenden Eigenschaften von ursprünglich konzipierten charakterisierenden Eigenschaften der Personentransportanlage erkennen zu können. Aus solchen Abweichungen können dann geeignete Rückschlüsse gezogen werden, beispielsweise ob bereits ein Bedarf für eine Wartung oder Reparatur der Personentransportanlage besteht, ob ein Risiko für erhöhten oder vorzeitigen Verschleiß besteht, etc. Beispielsweise können die Abweichungen aus bei der Fertigung der Bauteile eintretenden Fertigungstoleranzen, aus beim Zusammenbau der Bauteile oder bei deren Installation im Bauwerk bewirkten Veränderungen der charakterisierenden Eigenschaften der Bauteile und/oder beim letztendlichen Betrieb der Personentransportanlage auftretenden Veränderungen der charakterisierenden Eigenschaften der Bauteile beispielsweise aufgrund von Verschleiß herrühren. Zur Bemessung des Verschleißes kann hierbei das von der Erfassungseinrichtung erfasste Belastungsprofil herangezogen werden.

In einer Ausführung kann das von der Erfassungseinrichtung erfasste Belastungsprofil die von der Antriebsmaschine erbrachte Antriebsleistung über die Betriebszeit repräsentieren und aus dem erfassten Stromverlauf und dem Spannungsverlauf der Antriebsmaschine unter der Berücksichtigung der Antriebsmaschinen-Temperatur errechnet und erstellt werden. Die Antriebsleistung der Antriebsmaschine, die diese über die Zeit verbraucht, repräsentiert die Verlust-Reibungsenergie der bewegten physischen Bauteile sowie die potentielle Energie, die über die Zeit an die Nutzer der Personentransportanlage abgegeben wurde. Der Erfindung liegt die Erkenntnis zugrunde, dass die aufgenommene Antriebsleistung über die Zeit auch ein hervorragender Indikator für die verschleißbehaftete Belastung des Transportbands ist. Zur Erstellung des Belastungsprofils kann im Regelsatz eine gesonderte Berechnungsroutine hinterlegt sein, welche die aufgenommene Leistung und im Falle eines Rekuperationsbetriebes auch die abgegebene Leistung über die Zeit als Leistungskurve berechnet. Diese Leistungskurve kann von einem Betreuer oder Servicetechniker der Anlage über eine geeignete Schnittstelle (beispielsweise einem Computer) abgerufen und auf dessen Bildschirm dargestellt werden. Wie weiter oben ausgeführt, bildet das Belastungsprofil die Grundlage, auf der mittels des Regelsatzes die charakterisierenden Eigenschaften der einzelnen Bauteilmodell-Datensätze aktualisiert werden.

Dieses erfasste Belastungsprofil kann mittels des Regelsatzes auf periodisch auftretende Peaks untersucht werden, wobei beim Auftreten von Peaks diese einer Stelle des Transportbandes zugeordnet werden können. Solch periodisch auftretende Peaks sind ein starker Hinweis, dass an der zugeordneten Stelle des Transportbandes eine Defekt vorliegt, beispielsweise ein Bruch oder Lagerschaden einer Stufenrolle oder Kettenrolle, ein Bruch der Stufenachse und dergleichen mehr. Da die Daten auf den ADDD übertragen werden und jedes physische Bauteil als virtuelles Bauteil im ADDD abgebildet ist, kann die Zuordnung auf dem ADDD erfolgen.

In einer weiteren Ausführung kann die Erfassungseinrichtung ein Radarsensor oder eine Lichtschranke sein, durch welche Personen erfasst werden, die die Personentransportanlage betreten. Die erfassten Personen werden beispielsweise mittels im Regelsatz hinterlegten Belastungsanalysen mit einer durchschnittlichen, angenommenen Masse (beispielsweise 85kg) in ein Belastungsprofil umgerechnet. Auch dieses Belastungsprofil kann wie vorangehend beschrieben, auf einem Bildschirm dargestellt werden.

In einer weiteren Ausführung kann die Erfassungseinrichtung ein in der physischen Personentransportanlage angeordneter Lastsensor ist, durch welchen Lasten direkt erfasst werden, die die Personentransportanlage fördert, wobei diese in ein Belastungsprofil umgerechnet werden.

Es ist selbstverständlich möglich, dass die Personentransportanlage mehrere der vorangehend beschriebenen Erfassungseinrichtungen aufweist. Deren Messwerte können mittels des Regelsatzes auch miteinander kombiniert und/oder verglichen werden, um zu einem präziseren Belastungsprofil zu gelangen.

Das Belastungsprofil kann mittels des Regelsatzes über die gesamte Betriebszeit zu einer Belastungssumme aufsummiert beziehungsweise integriert werden. Dieser Belastungssumme können entsprechende, auf Erfahrungswerten basierende Verschleißwerte für die vom Belastungsprofil betroffenen Bauteilmodell-Datensätze extrahiert werden. Mit diesen Verschleißwerten können hernach, ausgehend von den an der physischen Personentransportanlage nach deren Zusammenbau und Installation in einem Bauwerk durch Messen ermittelten, charakterisierenden Eigenschaften, die zur Aktualisierung vorgesehenen, neuen charakterisierenden Eigenschaften ermittelt werden.

Aus den vorangehenden Ausführungen wird deutlich, dass der Regelsatz nicht eine einfache Formel, sondern ein umfangreiches Computerprogramm beziehungsweise ein Teil eines Computerprogramms des ADDD ist. Im Regelsatz kann beispielsweise eine Datenbank mit Verschleißwerten hinterlegt sein, es können aber auch eine Vielzahl von Algorithmen, Berechnungsmethoden aus dem Gebiet der Physik, der technischen Mechanik und der Festigkeitslehre, sowie stochastische Berechnungsmetoden implementiert sein. Selbstverständlich kann der Regelsatz auch eine Zugriffsregelung auf externe Computerprogramme und Datenbanken beinhalten, in denen diese Algorithmen und Berechnungsmethoden implementiert sind. Vorzugsweise ist in den einzelnen Bauteilmodell-Datensätzen hinterlegt, welche Berechnungsgrundlagen aus dem Regelsatz bei seinen charakteristischen Eigenschaften zur Anwendung kommen.

Dadurch, dass der ADDD als virtuelle digitale Kopie der tatsächlichen Personentransportanlage Rückschlüsse auf in der Personentransportanlage aktuell vorherrschende charakterisierende Eigenschaften zulässt, können bestenfalls allein durch Analyse und/oder Verarbeitung des ADDD Informationen gewonnen werden, die Rückschlüsse auf den aktuellen Zustand der Personentransportanlage und insbesondere Rückschlüsse über eine eventuell notwendige Wartung oder Reparatur ermöglichen. Dabei können gegebenenfalls sogar Informationen darüber abgeleitet werden, welche Ersatzteile und/oder Werkzeuge für eine anstehende Wartung oder Reparatur benötigt werden.

Der ADDD kann dabei in einem zur Durchführung des hierin vorgeschlagenen Verfahrens konfigurierten Computer bzw. einer entsprechenden Datenverarbeitungsanlage gespeichert, analysiert und/oder verarbeitet werden. Insbesondere können der Computer bzw. die Datenverarbeitungsanlage entfernt von der zu überwachenden Personentransportanlage, beispielsweise in einem entfernten Überwachungszentrum, angeordnet sein.

Dementsprechend ermöglicht die Verwendung des ADDD, den Zustand der die Personentransportanlage charakterisierenden Eigenschaften kontinuierlich oder in geeigneten Zeitabständen fern von der physischen Personentransportanlage zu überwachen, um insbesondere Änderungen, die eine Wartung oder Reparatur notwendig erscheinen lassen, zu erkennen. Gegebenenfalls können hierauf basierend konkrete Informationen betreffend bei der Wartung beziehungsweise Reparatur durchzuführender Arbeiten vorab allein basierend auf einer Analyse des ADDD abgeleitet werden, ohne dass ein Techniker die Personentransportanlage tatsächlich vor Ort inspizieren müsste. Hierdurch können erheblicher Aufwand und Kosten eingespart werden.

Gemäß einer Ausführungsform können die von der Erfassungseinrichtung übermittelten Messdaten und/oder die daraus ermittelten, charakterisierenden Eigenschaften mit einer Zeitinformation in einem Logfile abgespeichert werden. Dies hat einerseits den Vorteil, dass eine Datenhistorie vorhanden ist, aus der beispielsweise besondere Ereignisse herausgelesen werden können, wie zum Beispiel eine momentane übermäßige Krafteinwirkung durch eine unsachgemäße Benutzung oder durch äußere Einwirkungen wie seismische Stöße und dergleichen mehr.

Andererseits dienen die Zeitinformationen im Logfile auch der korrekten Ermittlung der charakterisierenden Eigenschaften der betroffenen Bauteile. Solange nach der Inbetriebnahme der physischen Personentransportanlage noch keine Wartung durchgeführt wurde, wird für alle virtuellen Bauteile des zugeordneten ADDD dasselbe Belastungsprofil als Ermittlungsgrundlage von deren betroffenen, charakterisierenden Eigenschaften herangezogen. Wenn aber ein Verschleißteil bei Wartungsarbeiten ersetzt wird, dann ist für dessen virtueller Bauteilmodell-Datensatz das Belastungsprofil erst ab dem Ersatzzeitpunkt aufzusummieren.

Ferner kann mittels der im Logfile abgespeicherten Messdaten und/oder charakterisierenden Eigenschaften sowie von im Logfile gespeicherten Betriebsdaten mittels statistischer Methoden ein Veränderungstrend der Messwerte ermittelt werden. Betriebsdaten sind Daten, die während des Betriebes einer Personentransportanlage anfallen, beispielsweise die gesamte Betriebslaufzeit, die Leistungsaufnahme der Antriebsmaschine, die Umgebungstemperatur, die Betriebstemperatur und dergleichen mehr. Die dadurch gewonnenen Erkenntnisse lassen sich auf vielerlei Weise verwenden. Wenn der Veränderungstrend linear ist, lässt sich für das davon betroffene Bauteil das Lebensdauerende infolge stetigen Verschleißes recht gut voraussagen. Wenn der Veränderungstrend eine abnehmende Tendenz aufweist, weist dies auf ein Einlaufverhalten und damit auf einen zunehmend stabileren Zustand des betroffenen Bauteils hin. Bei zunehmender Tendenz des Veränderungstrends können verstärkte Verschleißerscheinungen diagnostiziert werden. Weiterführende Vorteile sind weiter unten angegeben.

Die Übertragung der Messwerte kann kontinuierlich, periodisch und/oder abhängig vom Veränderungstrend der Messwerte erfolgen. Bei einer Abhängigkeit vom Veränderungstrend bedeutet dies, dass bei linearer Tendenz des Veränderungstrends eine fixe Periodendauer gewählt werden kann. Bei einer abnehmenden Tendenz kann die Periodendauer zunehmend verlängert werden, während bei zunehmender Tendenz die Periodendauer zwischen zwei Messungen zunehmend verkürzt werden kann.

Die beim Aktualisieren des ADDD zu berücksichtigenden, verschleißbedingten charakterisierenden Eigenschaften der physischen Bauteile können geometrische Abmessungen des Bauteils, das Gewicht des Bauteils und/oder die Oberflächenbeschaffenheit des Bauteils sein. Geometrische Abmessungen der Bauteile können beispielsweise eine Länge, eine Breite, eine Höhe, ein Querschnitt, Radien, Verrundungen, etc. der Bauteile sein. Die Oberflächenbeschaffenheit der Bauteile kann beispielsweise Rauigkeiten, Texturen, Beschichtungen, Farben, Reflektivitäten, etc. der Bauteile umfassen.

Die charakterisierenden Eigenschaften können sich auf einzelne Bauteile oder Bauteilgruppen beziehen. Beispielsweise können sich die charakterisierenden Eigenschaften auf einzelne Bauteile beziehen, aus denen größere, komplexere Bauteilgruppen zusammengesetzt werden. Alternativ oder ergänzend können sich die Eigenschaften auch auf aus mehreren Bauteilen zusammengesetzte komplexere Gerätschaften wie zum Beispiel Antriebsmaschinen, Getriebeeinheiten, Förderketten, etc. beziehen.

Die charakterisierenden Eigenschaften vor der Inbetriebnahme können mit hoher Präzision ermittelt bzw. vermessen werden. Insbesondere können die charakterisierenden Eigenschaften mit einer Präzision ermittelt bzw. vermessen werden, die genauer ist als bei der Fertigung der Bauteile einzuhaltende Toleranzen.

Gemäß einer weiteren Ausführungsform umfasst das Überwachen des Zustandes der physischen Personentransportanlage auch ein Simulieren zukünftiger charakterisierender Eigenschaften der Personentransportanlage unter Verwendung des ADDD.

Mit anderen Worten sollen mithilfe des ADDD vorzugsweise nicht lediglich in der Personentransportanlage aktuell vorherrschende Eigenschaften überwacht werden können, sondern mittels durchzuführender Simulationen unter Verwendung des ADDD auch Rückschlüsse über zukünftig in der Personentransportanlage vorherrschende charakterisierende Eigenschaften gewonnen werden können.

Die Simulationen können dabei auf einem Computersystem ausgeführt werden. Mithilfe der Simulationen können ausgehend von aktuell in dem aktualisierten Digitaler-Doppelgänger-Datensatz enthaltenen Daten sowie gegebenenfalls unter Berücksichtigung von früher in dem aktualisierten Digitaler-Doppelgänger-Datensatz enthaltenen Daten Rückschlüsse auf eine zeitliche Entwicklung bei den repräsentierten charakterisierenden Eigenschaften gezogen werden und somit Prognosen oder Extrapolation betreffend zukünftige charakterisierende Eigenschaften der Bauteile gewonnen werden. Bei den Simulationen können sowohl naturgesetzliche Gegebenheiten berücksichtigt werden als auch auf Erfahrungen bei anderen Personentransportanlagen zurückgegriffen werden.

Beispielsweise können Simulationen berücksichtigen, wie sich zum Beispiel bereits eingetretene verschleißbedingte Veränderungen bei charakterisierenden Eigenschaften von Bauteilen auf zukünftig zu erwartende weitere Veränderungen bei diesen charakterisierenden Eigenschaften auswirken. Alternativ oder ergänzend können bei den Simulationen Erfahrungen berücksichtigt werden, die aus Experimenten und/oder durch die Beobachtung anderer Personentransportanlagen gewonnen wurden und aus denen zum Beispiel eine Aussage darüber abgeleitet werden kann, wann eine eingetretene oder zukünftig zu erwartende Veränderung bei charakterisierenden Eigenschaften eines Bauteils als für die Funktion der gesamten Personentransportanlage wesentlich anzunehmen ist, sodass geeignete Maßnahmen beispielsweise im Rahmen einer Wartung oder Reparatur eingeleitet werden sollten.

Mithilfe des Aktualisierter-Digitaler-Doppelgänger-Datensatzes können auch neue, verbesserte physische Bauteile und insbesondere Steuerungskomponenten (Hard und Software) entwickelt und getestet werden. Hierbei kann nach dem Hardware-in-the-Loop Ansatz der Bauteilmodell-Datensatz einer zu prüfenden Komponente im Aktualisierter-Digitaler-Doppelgänger-Datensatzes deaktiviert und dieser über geeignete Schnittstellen mit dem zu testenden Bauteil verbunden werden. Die geeignete Schnittstelle kann hierbei ein auf die mechanischen und/oder elektrischen Schnittstellen des physischen Bauteils angepasster Prüfstand sein, der mit einem den ADDD aufweisenden Computersystem verbunden ist. Anders ausgedrückt wird dem Hardware-in-the-Loop Ansatz gemäss dadurch ein eingebettetes System (z. B. reales elektronisches Steuergerät oder reale mechatronische Komponente, das physische Bauteil oder die physische Bauteilgruppe) über seine Ein- und Ausgänge mit dem ADDD verbunden, wobei der ADDD als Nachbildung der realen Umgebung des Systems beziehungsweise der gesamten Fahrtreppe oder des gesamten Fahrsteiges dient. Dadurch kann der ADDD aus Sicht des Tests zum Absichern von eingebetteten Systemen, zur Unterstützung während der Entwicklung sowie zur vorzeitigen Inbetriebnahme von Maschinen und Anlagen dienen.

Ein weiterer Vorteil des ADDD ist sein inhärenter Systems-Engineering-Ansatz. Im Mittelpunkt des Systems Engineering steht, die vom Kunden gewünschten Anforderungen an das zu liefernde System, die in der Spezifikation enthalten sind, innerhalb des Kosten- und Zeitrahmens zu erfüllen, indem erstens das System in Subsysteme, Geräte und Software heruntergebrochen und spezifiziert wird und zweitens die Implementierung über alle Ebenen kontinuierlich bis zur Übergabe an den Kunden kontrolliert wird. Dabei soll insbesondere das gesamte Problem (Betrieb, Kosten, Zeitplan, Performance, Weiterbildung und Support, Test, Produktion und Wiederverwertung) berücksichtigt werden. Systems Engineering integriert all diese Ingenieursdisziplinen und Fähigkeiten in einen einheitlichen, teamorientierten strukturierten Prozess, der sich je nach Komplexität des Systems über mehrere Ebenen bis zu einem Gerät eines Unterauftragnehmers erstrecken kann. Dieser Prozess wird von der Konzeption über die Produktion bis hin zum Betrieb und in manchen Fällen bis zum Abbau beziehungsweise zur Wiederverwertung angewandt. Durch die Abbildung sämtlicher physischer Bauteile als Bauteilmodell-Datensätze mit all ihren charakterisierenden Eigenschaften und Schnittstelleninformationen - vereinigt und stetig aktualisiert im ADDD - bietet dieser eine hervorragende System-Engineering Plattform um in kürzester Zeit die vom Kunden gewünschten Anforderungen an die zu liefernde Fahrtreppe oder den zu liefernden Fahrsteig über die Installation des physischen Produktes hinaus, umzusetzen.

Insbesondere kann das hierin vorgeschlagene Verfahren ferner ein Planen von durchzuführenden Wartungsarbeiten an der Personentransportanlage basierend auf den überwachten Eigenschaften der Personentransportanlage umfassen.

Mit anderen Worten können die Informationen, die beim erfindungsgemäßen Überwachen der Eigenschaften der Personentransportanlage gewonnen werden, dazu genutzt werden, um zukünftige Wartungsarbeiten einschließlich dabei notwendiger etwaiger Reparaturen bereits vorab geeignet planen zu können. Dabei kann von Vorteil sein, dass alleine durch Analyse des aktualisierten Digitaler-Doppelgänger-Datensatzes bereits wertvolle Informationen beispielsweise darüber erhalten werden können, welche Veränderungen in einer überwachten Personentransportanlage eingetreten sind und/oder mit welchem Verschleiß bei Bauteilen der Personentransportanlage tatsächlich gerechnet werden muss. Diese Informationen können genutzt werden, um Wartungsarbeiten beispielsweise hinsichtlich eines Wartungszeitpunkts und/oder hinsichtlich bei der Wartung durchzuführender Tätigkeiten und/oder hinsichtlich bei der Wartung vorzuhaltender Ersatzteile bzw. Werkzeuge und/oder hinsichtlich der die Wartung durchführender Techniker, die eventuell spezielle Fähigkeiten oder Wissen haben müssen, planen zu können. Die Planung der Wartungsarbeiten kann dabei in den meisten Fällen rein basierend auf einer Analyse des aktualisierten Digitaler-Doppelgänger-Datensatzes erfolgen, das heißt ohne dass ein Techniker die Personentransportanlage vor Ort inspizieren müsste.

Gemäß einer Ausführungsform der vorliegenden Erfindung umfasst das vorgeschlagene Überwachungsverfahren auch ein Erstellen des ADDD. Das Erstellen des ADDD umfasst dabei zumindest die folgenden Schritte, vorzugsweise aber nicht zwingend streng in der angegebenen Reihenfolge:
(i) Erstellen eines Kommissionierungs-Digitaler-Doppelgänger-Datensatzes mit Soll-Daten, welche charakterisierende Eigenschaften von Bauteilen der Personentransportanlage in einer Soll-Konfiguration wiedergeben;
(ii) Erstellen eines Fertigstellungs-Digitaler-Doppelgänger-Datensatzes basierend auf dem Kommissionierungs-Digitaler-Doppelgänger-Datensatz durch Messen von Ist-Daten, welche charakterisierende Eigenschaften von Bauteilen der Personentransportanlage in der tatsächlichen Konfiguration der Personentransportanlage direkt nach deren Zusammenbau und Installation in einem Bauwerk wiedergeben und Ersetzen von Soll-Daten in dem Kommissionierungs-Digitaler-Doppelgänger-Datensatz durch entsprechende Ist-Daten; und
(iii) Erstellen des ADDD basierend auf dem Fertigstellungs-Digitaler-Doppelgänger-Datensatz durch Aktualisieren des Fertigstellungs-Digitaler-Doppelgänger-Datensatzes während des Betriebs der physischen Personentransportanlage unter Berücksichtigung des durch die Erfassungseinrichtung erfassten Belastungsprofils, wobei mittels des Regelsatzes aus dem erfassten Belastungsprofils die zu aktualisierenden charakterisierenden Eigenschaften von Bauteilmodell-Datensätzen insbesondere des Transportbandes ermittelt werden.

Mit anderen Worten kann ein Erstellen des ADDD in mehreren Teilschritten erfolgen. Dabei können die in dem Datensatz enthaltenen Daten sukzessive verfeinert und präzisiert werden, so dass die charakterisierenden Eigenschaften der in der Personentransportanlage verbauten Bauteile mit fortlaufender Erstellung immer genauer hinsichtlich ihrer tatsächlichen aktuellen Konfiguration wiedergegeben werden.

Der vorangehend beschriebene Kommissionierungs-Digitaler-Doppelgänger-Datensatz ist jedoch nicht einfach "ab Stange" verfügbar. Gemäß einer weiteren Ausführungsform umfasst das Erstellen des Kommissionierungs-Digitaler-Doppelgänger-Datensatzes ein vorgängiges Erstellen eines Digitaler-Doppelgänger-Datensatzes unter Berücksichtigung von kundenspezifischen Konfigurierungsdaten sowie ein Erstellen von Fertigungsdaten durch Modifizieren des Digitaler-Doppelgänger-Datensatzes unter Berücksichtigung von produktionsspezifischen Daten.

Mit anderen Worten sollen beim anfänglichen Erstellen des Kommissionierungs-Digitaler-Doppelgänger-Datensatzes sowohl kundenspezifische Konfigurierungsdaten als auch produktionsspezifische Daten berücksichtigt werden. Dabei wird zunächst im Regelfall ein Digitaler-Doppelgänger-Datensatz unter Berücksichtigung der kundenspezifischen Konfigurierungsdaten aus Bauteilmodell-Datensätzen erstellt und dann dieser Digitaler-Doppelgänger-Datensatz unter Berücksichtigung der produktionsspezifischen Daten modifiziert bzw. verfeinert. Eventuell kann das Erstellen des Kommissionierungs-Digitaler-Doppelgänger-Datensatzes auch iterativ ein mehrfaches Berechnen und Modifizieren von Daten des Digitaler-Doppelgänger-Datensatzes unter Berücksichtigung der Kunden- und/oder produktionsspezifische Daten umfassen.

Unter kundenspezifischen Konfigurierungsdaten können dabei Vorgaben verstanden werden, welche Einzelfall-spezifisch vom Kunden zum Beispiel beim Ordern der Personentransportanlage vorgegeben werden. Die kundenspezifischen Konfigurierungsdaten beziehen sich dabei typischerweise auf eine einzelne zu fertigende Personentransportanlage. Beispielsweise können die kundenspezifischen Konfigurierungsdaten vorherrschende räumliche Bedingungen am Einbauort, Schnittstelleninformationen zum Anbau an tragende Strukturen eines Bauwerks, etc. umfassen. Anders ausgedrückt können die kundenspezifischen Konfigurierungsdaten zum Beispiel angeben, welche Länge die Personentransportanlage haben soll, welcher Höhenunterschied überwunden werden soll, in welcher Weise die Personentransportanlage an tragende Strukturen innerhalb des Gebäudes angebunden werden soll, und dergleichen mehr. Kundenspezifische Konfigurierungsdaten können auch Wünsche des Kunden hinsichtlich Funktionalität, Förderkapazität, Optik, etc. umfassen. Die Daten des Digitaler-Doppelgänger-Datensatzes können beispielsweise als CAD-Datensatz vorliegen, welcher unter anderem als charakterisierende Eigenschaften geometrische Abmessungen und/oder andere charakterisierende Eigenschaften der die Personentransportanlage bildenden Bauteile wiedergibt.

Die produktionsspezifischen Daten beziehen sich typischerweise auf Eigenschaften oder Vorgaben innerhalb einer Fertigungsfabrik oder Fertigungslinie, in der die Personentransportanlage gefertigt werden soll. Beispielsweise können, zum Beispiel je nachdem in welchem Land oder an welchem Ort eine Fertigungsfabrik steht, in der Fertigungsfabrik verschiedene Bedingungen herrschen und/oder Vorgaben einzuhalten sein. Beispielsweise können in manchen Fertigungsfabriken bestimmte Materialien, Rohstoffe, Rohbauteile oder Ähnliches nicht verfügbar sein oder nicht verarbeitet werden. In manchen Fertigungsfabriken können Maschinen eingesetzt werden, die in anderen Fertigungsfabriken fehlen. Manche Fertigungsfabriken unterliegen aufgrund ihres Layouts Restriktionen hinsichtlich der darin zu fertigenden Personentransportanlagen bzw. Komponenten derselben. Manche Fertigungsfabriken ermöglichen einen hohen Grad an automatisierter Fertigung, wohingegen andere Fertigungsfabriken beispielsweise aufgrund niedriger Lohnkosten eher manuelle Fertigung einsetzen können. Es können noch eine Vielzahl weiterer Bedingungen und/oder Vorgaben existieren, bezüglich derer sich Fertigungsumgebungen unterscheiden können. All diese produktionsspezifischen Daten müssen typischerweise beim Planen bzw. Kommissionieren einer Personentransportanlage berücksichtigt werden, da von ihnen abhängig sein kann, in welcher Weise eine Personentransportanlage tatsächlich gebaut werden kann. Gegebenenfalls kann es erforderlich sein, den anfänglich erstellten Digitaler-Doppelgänger-Datensatz, welcher lediglich die kundenspezifischen Konfigurierungsdaten berücksichtigt hat, grundlegend zu modifizieren, um den produktionsspezifische Daten Rechnung tragen zu können.

Vorzugsweise werden bereits beim Erstellen des Digitaler-Doppelgänger-Datensatzes statische und/oder dynamische Simulationen durchgeführt und der Kommissionierungs-Digitaler-Doppelgänger-Datensatz wird unter Berücksichtigung von Ergebnissen der Simulationen erstellt. Eine dieser dynamischen Simulationen kann beispielsweise ein Anfahrverhalten bei einer Fahrtreppe sein. Hierbei werden vom Stillstand bis zur Nenngeschwindigkeit alle Friktionskräfte sowie Spiele und die von der Antriebsmaschine abhängigen Eigenschaften simuliert. Mit diesen Simulationen können kollisionskritische Stellen überprüft, sowie die auf die einzelnen Bauteile beziehungsweise Bauteilmodell-Datensätze einwirkenden dynamischen Kräfte während des Anfahrens ermittelt werden.

Mit anderen Worten können zum Erstellen des Digitaler-Doppelgänger-Datensatzes, welcher unter Berücksichtigung der kundenspezifischen Konfigurierungsdaten die Grundlage des Kommissionierungs- Digitaler-Doppelgänger-Datensatzes bilden, Simulationen durchgeführt werden, mit denen statische und/oder dynamische Eigenschaften der kommissionierten Personentransportanlage simuliert werden. Simulationen können beispielsweise in einem Computersystem durchgeführt werden.

Statische Simulationen analysieren hierbei beispielsweise ein statisches Zusammenwirken mehrerer zusammengebauter Bauteile. Mithilfe statischer Simulationen kann beispielsweise analysiert werden, ob es beim Zusammenbau von mehreren vordefinierten Bauteilen oder basierend auf Bauteilmodell- Datensätzen fallgerecht spezifizierter Bauteile zu Komplikationen kommen kann, beispielsweise, da jedes der Bauteile mit gewissen Fertigungstoleranzen gefertigt wird, sodass es bei ungünstiger Summierung von Fertigungstoleranzen zu Problemen kommen kann.

Dynamische Simulationen analysieren beispielsweise ein dynamisches Verhalten von Bauteilen beim Betrieb der zusammengebauten Personentransportanlage. Mithilfe dynamischer Simulationen kann beispielsweise analysiert werden, ob bewegliche Bauteile, insbesondere die umlaufend angeordneten Bauteile innerhalb einer Personentransportanlage in einer gewünschten Weise verlagert werden können oder ob beispielsweise Kollisionen zwischen relativ zu einander beweglichen Bauteilen drohen.

Aus den vorangehenden Ausführungen ist zu entnehmen, dass im Kommissionierungs-Digitaler-Doppelgänger-Datensatz zunächst lediglich Soll-Daten abgelegt sind, welche auf den Daten basieren, die beim Planen bzw. Kommissionieren der Personentransportanlage ermittelt wurden. Die Soll-Daten können unter anderem erhalten werden, wenn beispielsweise mit computergestützten Kommissionierungstools in Abhängigkeit von kundenspezifischen Konfigurierungsdaten charakterisierende Eigenschaften einer zu fertigenden Personentransportanlage berechnet werden. Beispielsweise können in dem Kommissionierungs-Digitaler-Doppelgänger-Datensatz Daten betreffend Soll-Abmessungen, Soll-Anzahlen, Soll-Materialeigenschaften, Soll-Oberflächenbeschaffenheit etc. von bei der Fertigung der Personentransportanlage zu verwendenden Bauteilen abgelegt sein.

Der Kommissionierungs-Digitaler-Doppelgänger-Datensatz stellt somit ein virtuelles Abbild der Personentransportanlage in ihrer Planungsphase bzw. Kommissionierungsphase dar, das heißt, bevor die Personentransportanlage anhand des Kommissionierungs-Digitaler-Doppelgänger-Datensatzes tatsächlich gefertigt und installiert wird.

Ausgehend von dem Kommissionierungs-Digitaler-Doppelgänger-Datensatz können dann die darin enthaltenen Soll-Daten mit zunehmendem Produktionsfortschritt sukzessive durch Ist-Daten ersetzt werden und dadurch ein Fertigstellungs-Digitaler-Doppelgänger-Datensatz generiert werden. Die Ist-Daten geben dabei charakterisierende Eigenschaften der zunächst nur hinsichtlich ihrer Soll-Konfiguration definierten Bauteile der Personentransportanlage in ihrer tatsächlichen Konfiguration direkt nach dem Zusammenbau der Personentransportanlage und deren Installation im Bauwerk an. Die Ist-Daten können durch manuelles und/oder maschinelles Vermessen der charakterisierenden Eigenschaften der Bauteile ermittelt werden. Hierzu können separate Messvorrichtungen und/oder in Bauteile integrierte oder an Bauteile angeordnete Sensoren eingesetzt werden.

Der Fertigstellungs-Digitaler-Doppelgänger-Datensatz stellt somit ein virtuelles Abbild der Personentransportanlage direkt nach ihrer Fertigstellung, das heißt nach dem Zusammenbau der Bauteile und der Installation im Bauwerk, dar.

Bei der Inbetriebnahme der physischen Personentransportanlage wird deren Fertigstellungs-Digitaler-Doppelgänger-Datensatz mit den hierbei anfallenden Betriebsdaten und Betriebseinstellungsdaten zum ADDD ergänzt. Während des nachfolgenden Betriebs der Personentransportanlage wird der ADDD kontinuierlich oder in geeigneten Zeitabständen aktualisiert. Die in dem ADDD anfänglich abgelegten Daten werden hierzu während des Betriebs der Personentransportanlage dahingehend modifiziert, dass auf Basis des Belastungsprofils errechnete Veränderungen in den charakterisierenden Eigenschaften der die Personentransportanlage bildenden Bauteile berücksichtigt werden.

Über die Zeit hinweg auftretende Änderungen bei den von der Erfassungseinrichtung gelieferten Messwerten deuten auf Änderungen bei den beobachteten charakterisierenden Eigenschaften hin, woraufhin die in dem ADDD enthaltenen Daten entsprechend berechnet und modifiziert werden können. Der auf diese Weise modifizierte ADDD stellt somit ein virtuelles Abbild der Personentransportanlage während des Betriebs derselben und unter Berücksichtigung beispielsweise verschleißbedingter Änderungen im Vergleich zu den ursprünglich direkt nach der Fertigstellung gemessenen charakterisierenden Eigenschaften dar und kann somit als ADDD zum kontinuierlichen bzw. wiederholten Überwachen der Eigenschaften der Personentransportanlage verwendet werden.

Logischerweise müssen nicht zwingend alle als Soll-Daten vorhandene, charakterisierende Eigenschaften eines Bauteils durch Ist-Daten des Bauteils oder durch die auf Basis des Belastungsprofils errechneten charakterisierenden Eigenschaften aktualisiert werden. Demzufolge sind die charakterisierenden Eigenschaften der meisten Bauteile eines Fertigstellungs-Digitaler-Doppelgänger-Datensatzes und des daraus entstandenen ADDD durch eine Mischung von Soll-Daten, Ist-Daten und errechneten Daten charakterisiert.

Konkrete Ausgestaltungen, wie ein ADDD für eine Fahrtreppe bzw. einen Fahrsteig erstellt werden kann und wie darauf basierend der Zustand der Fahrtreppe bzw. des Fahrsteigs überwacht werden können, werden weiter unten mit Bezug auf bevorzugte Ausführungsformen dargelegt.

Ausführungsformen des hierin vorgestellten Verfahrens zum Überwachen des Zustands einer Personentransportanlage können mithilfe einer hierfür speziell konfigurierten Vorrichtung durchgeführt werden. Die Vorrichtung kann einen oder mehrere Computer umfassen. Insbesondere kann die Vorrichtung aus einem Computernetzwerk gebildet sein, welches Daten in Form einer Datenwolke (Cloud) verarbeitet. Die Vorrichtung kann hierfür über einen Speicher verfügen, in dem die Daten des ADDD gespeichert werden können, beispielsweise in elektronischer oder magnetischer Form. Die Vorrichtung kann ferner über Datenverarbeitungsmöglichkeiten verfügen. Beispielsweise kann die Vorrichtung einen Prozessor aufweisen, mithilfe dessen Daten des ADDD verarbeitet werden können. Die Vorrichtung kann ferner über Schnittstellen verfügen, über die Daten in die Vorrichtung eingegeben und/oder aus der Vorrichtung ausgegeben werden können. Insbesondere kann die Vorrichtung eine Erfassungseinrichtung aufweisen, die an oder in der Personentransportanlage angeordnet ist und mit deren Hilfe ein Belastungsprofil des Transportbandes aufgenommen werden kann. Die Vorrichtung kann prinzipiell Teil der Personentransportanlage sein. Vorzugsweise ist die Vorrichtung jedoch nicht in der Personentransportanlage angeordnet, sondern entfernt zu dieser, beispielsweise in einem entfernten Kontrollzentrum, von dem aus der Zustand der Personentransportanlage überwacht werden soll. Die Vorrichtung kann auch räumlich verteilt implementiert sein, beispielsweise wenn Daten über mehrere Computer verteilt in einer Datenwolke verarbeitet werden.

Insbesondere kann die Vorrichtung programmierbar sein, das heißt durch ein geeignet programmiertes Computerprogrammprodukt dazu veranlasst werden, das erfindungsgemäße Verfahren auszuführen oder zu steuern. Das Computerprogrammprodukt kann Anweisungen oder Code enthalten, welche beispielsweise den Prozessor der Vorrichtung dazu veranlassen, Daten des Digitaler-Doppelgänger-Datensatzes abzuspeichern, auszulesen, zu verarbeiten, zu modifizieren, etc. Das Computerprogrammprodukt kann in einer beliebigen Computersprache verfasst sein.

Das Computerprogrammprodukt kann auf einen beliebigen computerlesbaren Medium gespeichert sein, beispielsweise einem Flash-Speicher, einer CD, einer DVD, RAM, ROM, PROM, EPROM, etc. Das Computerprogrammprodukt und/oder die damit zu verarbeitenden Daten können auch auf einem Server oder mehreren Servern gespeichert sein, beispielsweise in einer Datenwolke, von wo aus sie über ein Netz, beispielsweise das Internet, heruntergeladen werden können.

Abschließend wird daraufhingewiesen, dass einige der möglichen Merkmale und Vorteile der Erfindung hierin mit Bezug auf unterschiedliche Ausführungsformen sowohl des vorgeschlagenen Verfahrens als auch der entsprechend ausgebildeten Vorrichtung zum Überwachen von Eigenschaften einer Personentransportanlage beschrieben sind. Ein Fachmann erkennt, dass die Merkmale in geeigneter Weise kombiniert, übertragen, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.

Figur 1 zeigt eine erfindungsgemäße Vorrichtung, aufweisend eine Erfassungseinrichtung, die in einer physischen Personentransportanlage angeordnet ist, sowie ein die physische Personentransportanlage abbildender Aktualisierter-Digitaler-Doppelgänger-Datensatz (ADDD), der in einer Datenwolke (Cloud) gespeichert ist und mit welcher Vorrichtung ein erfindungsgemäßes Verfahren durchgeführt werden kann.

Figur 2 zeigt die Fahrtreppe aus der Figur 1 in geschnittener Seitenansicht.

Figur 3 zeigt in vergrößerter Darstellung den in der Figur 2 angegebenen Bereich, wobei die in diesem Bereich angeordnete Erfassungseinrichtung detaillierter dargestellt ist.

Figur 4 zeigt ein durch die Erfassungseinrichtung aufgenommenes Belastungsprofil.

Figur 5 zeigt in einem Regelsatz implementierte Verfahrensschritte zur Verarbeitung des in der Figur 4 dargestellten Belastungsprofils beispielhaft anhand verschleißunterworfener Bauteile der physischen Personentransportanlage, wobei aus dem Belastungsprofil die Verschleißerscheinungen für deren Bauteilmodell-Datensätze ermittelt werden.

Figur 6 veranschaulicht ein Erstellen eines Aktualisierter-Digitaler-Doppelgänger-Datensatzes (ADDD) und die Produktion einer physischen Personentransportanlage sowie deren Inbetriebnahme und die kontinuierliche Aktualisierung des ADDD von der Konfigurierung bis zum Betrieb der physischen Personentransportanlage.

Die Figuren sind lediglich schematisch und nicht maßstabsgetreu. Gleiche Bezugszeichen bezeichnen in den verschiedenen Figuren gleiche oder gleichwirkende Merkmale.

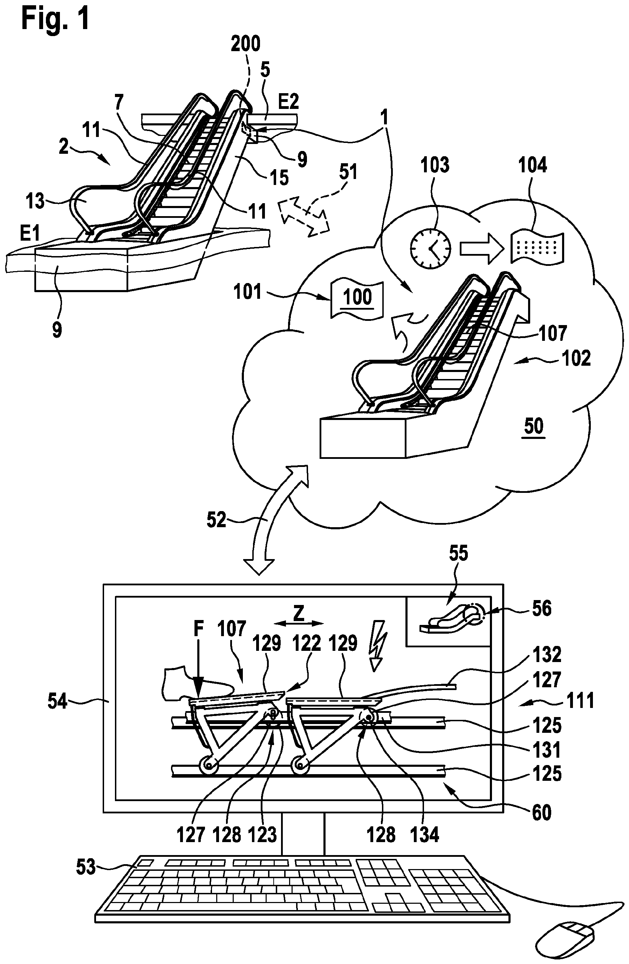

Figur 1 zeigt eine erfindungsgemäße Vorrichtung 1, umfassend eine Erfassungseinrichtung 200, die in einer physischen Personentransportanlage 2 angeordnet ist, sowie einen Aktualisierter-Digitaler-Doppelgänger-Datensatz (ADDD) 102 der physischen Personentransportanlage 2, der in einer Datenwolke (Cloud) 50 gespeichert ist, wobei mittels der Vorrichtung 1 ein erfindungsgemäßes Verfahren 100 durchgeführt werden kann.

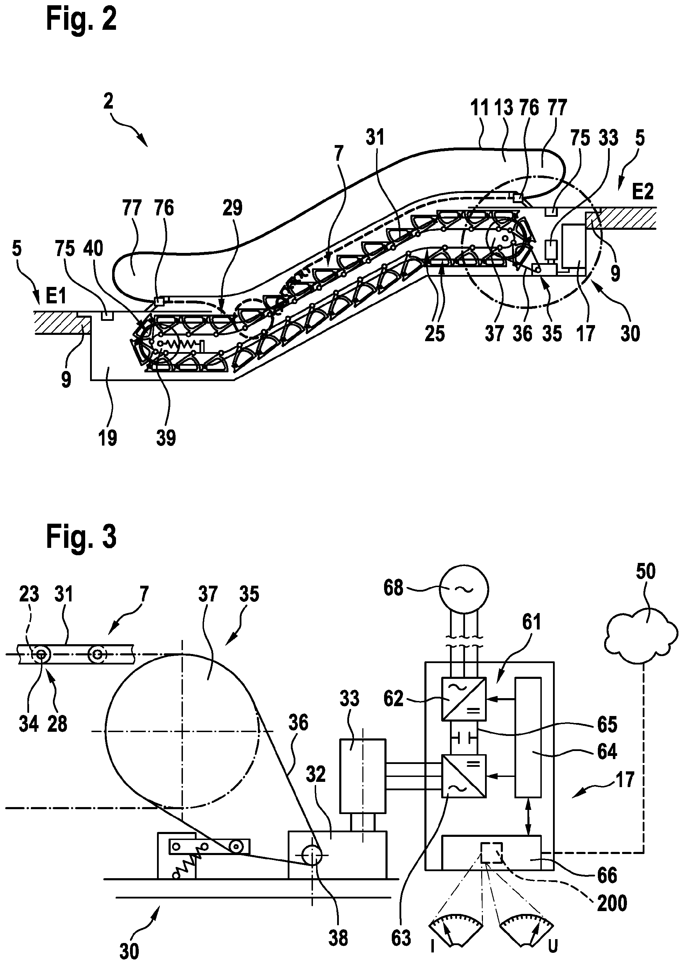

Die in den Figuren 1 und 2 (nachfolgend gemeinsam beschrieben) dargestellte physische Personentransportanlage 2 ist in Form einer Fahrtreppe ausgestaltet und verbindet in einem Bauwerk 5 auf unterschiedlichen Höhen gelegene und horizontal voneinander beabstandeten Ebenen E1 und E2. Mittels der physischen Personentransportanlage 2 können Passagiere zwischen den beiden Ebenen E1 und E2 befördert werden. Die physische Personentransportanlage 2 liegt an ihren gegenüberliegenden Enden auf Auflagestellen 9 des Bauwerks 5 auf.

Die physische Personentransportanlage 2 umfasst ferner ein in der Figur 2 nur in seinen Umrissen dargestelltes Tragwerk 19, welches sämtliche weiteren Bauteile der physischen Personentransportanlage 2 lasttragend aufnimmt. Dazu gehören statisch angeordnete physische Bauteile wie Führungsschienen 25, eine Antriebsmaschine 33, ein Antriebsstrang 35, eine Steuerung 17, von der Antriebsmaschine 33 über den Antriebsstrang 35 angetriebene Antriebskettenräder 37 sowie ein Umlenkbogen 39. Die physische Personentransportanlage 2 umfasst ferner Balustraden 13, die zu ihren beiden Längsseiten oberhalb des Tragwerks 19 an diesem angeordnet sind. Der Umlenkbogen 39 ist Teil einer Förderkettenspannvorrichtung 40.

Des Weiteren weist die physische Personentransportanlage 2 auch umlaufend angeordnete Bauteile 7, 11, 31, 36 auf, die naturgemäß während des Betriebes Verschleißerscheinungen unterworfen sind. Es sind dies insbesondere ein Transportband 7, welches zwischen den Antriebskettenrädern 37 und den Umlenkbogen 39 umlaufend angeordnet ist, zwei Handläufe 11 beziehungsweise Handlaufriemen, die an den Balustraden 13 umlaufend angeordnet sind sowie eine Antriebskette 36, die als Übertragungsglied Teil des Antriebsstranges 35 ist. Das Transportband 7 umfasst Fahrtreppenstufen 29 und Förderketten 31 sowie noch eine Vielzahl weitere Bauteile wie Stufenrollen, Kettenrollen, Stufenachsen und dergleichen mehr.

Alternativ kann die physische Personentransportanlage 2 auch als Fahrsteig (nicht dargestellt) ausgestaltet sein, der hinsichtlich vieler seiner Bauteile ähnlich oder gleich wie die als Fahrtreppe dargestellte physische Personentransportanlage 2 aufgebaut ist.

Wie die Figur 1 zeigt, sind viele Bauteile der physischen Personentransportanlage 2 wie das Fachwerk 19, die Führungsschienen 25, der gesamte Antriebsstrang 35, die Antriebskettenräder 37 und Umlenkbogen 39, die elektrische Ausrüstung wie Strom- und Signalleitungen, Sensoren und die Steuerung 17 durch Verkleidungsbauteile 15 abgedeckt und geschützt und daher von außen nicht einsehbar. Auch vom Transportband 7 sind in der Figur 1 nur ein Teil der Fahrtreppenstufen 29 des von Passagieren betretbaren Vorlaufs sichtbar.

Die Vorrichtung 1 umfasst gemäss der Figur 1 zudem einen Aktualisierter-Digitaler-Doppelgänger-Datensatz 102, der nachfolgend der besseren Lesbarkeit wegen abgekürzt als ADDD 102 bezeichnet wird. Der ADDD 102 ist ein möglichst umfassendes, dem aktuellen physischen Zustand der physische Personentransportanlage 2 nachgeführtes virtuelles Abbild und stellt daher eine der physischen Personentransportanlage 2 zugeordnete, virtuelle Personentransportanlage dar. Das heißt, dass der ADDD 102 nicht nur ein virtuelles Hüllenmodell der physischen Personentransportanlage 2 ist, das in etwa dessen Abmaße repräsentiert, sondern es ist jedes einzelne physische Bauteil vom Handlauf 11 bis zur letzten Schraube mit möglichst allen seinen charakterisierenden Eigenschaften auch in digitalisierter Form im ADDD 102 vorhanden und abgebildet.

Erfindungsgemäss können charakterisierende Eigenschaften von Bauteilen geometrische Abmessungen der Bauteile wie beispielsweise eine Länge, eine Breite, eine Höhe, ein Querschnitt, Radien, Verrundungen, etc. sein. Auch die Oberflächenbeschaffenheit der Bauteile wie beispielsweise Rauigkeiten, Texturen, Beschichtungen, Farben, Reflektivitäten, etc. gehören zu den charakterisierenden Eigenschaften. Ferner können auch Materialwerte wie beispielsweise das Elastizitätsmodul, der Biegewechselfestigkeitswert, die Härte, der Kerbschlagzähigkeitswert, der Zugfestigkeitswert, etc. als charakterisierende Eigenschaften des jeweiligen Bauteils hinterlegt sein. Es handelt sich hierbei nicht um theoretische Eigenschaften (Soll-Daten), wie sie beispielsweise auf einer Fertigungszeichnung zu finden sind, sondern um tatsächlich am physischen Bauteil ermittelte charakterisierende Eigenschaften (Ist-Daten). Auch montagerelevante Angaben wie beispielsweise das tatsächlich aufgebrachte Anzugsdrehmoment einer Schraube und damit deren Vorspannkraft sind vorzugsweise dem jeweiligen Bauteil zugeordnet.

Die Vorrichtung 1 kann beispielsweise ein oder mehrere Computersysteme 111 umfassen. Insbesondere kann die Vorrichtung 1 ein Computernetzwerk umfassen, welches Daten in Form einer Datenwolke 50 (Cloud) speichert und verarbeitet. Die Vorrichtung 1 kann hierfür über einen Speicher, oder wie symbolisch dargestellt, über Speicherressourcen in der Datenwolke 50 verfügen, in dem die Daten des ADDD 102 (symbolisch als dreidimensionales Abbild der physischen Personentransportanlage 2 dargestellt) gespeichert werden können, beispielsweise in elektronischer oder magnetischer Form. Das bedeutet, dass der ADDD 102 an einem beliebigen Speicherort abgespeichert sein kann.

Die Vorrichtung 1 kann ferner über Datenverarbeitungsmöglichkeiten verfügen. Beispielsweise kann die Vorrichtung 1 einen Prozessor aufweisen, mithilfe dessen Daten des ADDD 102 verarbeitet werden können. Die Vorrichtung 1 kann ferner über Schnittstellen 53, 54 verfügen, über die Daten in die Vorrichtung 1 eingegeben und/oder aus der Vorrichtung 1 ausgegeben werden können. Insbesondere kann die Vorrichtung 1 interne Schnittstellen 51, 52 aufweisen, wobei die Schnittstelle 51 zwischen dem ADDD 102 und der physischen Personentransportanlage 2 eine Kommunikation zur Erfassungseinrichtung 200 ermöglicht, die an oder in der Personentransportanlage 2 angeordnet ist und mit deren Hilfe direkt oder indirekt charakterisierende Eigenschaften von Bauteilen der Personentransportanlage 2 gemessen und ermittelt werden können.

Die Vorrichtung 1 kann prinzipiell gesamthaft in der physischen Personentransportanlage 2, verwirklicht sein, wobei deren ADDD 102 beispielsweise in deren Steuerung 17 gespeichert ist und dessen Daten durch die Steuerung 17 verarbeitet werden kann. Vorzugsweise ist der ADDD 102 der Vorrichtung 1 jedoch nicht in der physischen Personentransportanlage 2 gespeichert, sondern entfernt zu dieser, beispielsweise in einem entfernten Kontrollzentrum, von dem aus der Zustand der physischen Personentransportanlage 2 überwacht werden soll oder in der von überall her beispielsweise über eine Internetverbindung erreichbaren Datenwolke 50. Die Vorrichtung 1 kann auch räumlich verteilt implementiert sein, beispielsweise wenn Daten des ADDD 102 über mehrere Computer verteilt in der Datenwolke 50 verarbeitet werden.

Insbesondere kann die Vorrichtung 1 programmierbar sein, das heißt durch ein geeignet programmiertes, den ADDD 102 umfassendes Computerprogrammprodukt 101 kann diese dazu veranlasst werden, das erfindungsgemäße Verfahren 100 auszuführen oder zu steuern. Das Computerprogrammprodukt 101 kann Anweisungen oder Code enthalten, welche beispielsweise einen Prozessor der Vorrichtung 1 dazu veranlassen, gemäss dem implementierten Verfahren 100 Daten des ADDD 102 abzuspeichern, auszulesen, zu verarbeiten, zu modifizieren, etc. Das Computerprogrammprodukt 101 kann in einer beliebigen Computersprache verfasst sein.

Das Computerprogrammprodukt 101 kann auf einem beliebigen computerlesbaren Medium gespeichert sein, beispielsweise einem Flash-Speicher, einer CD, einer DVD, RAM, ROM, PROM, EPROM, etc. Das Computerprogrammprodukt 101 und/oder die damit zu verarbeitenden Daten können auch auf einem Server oder mehreren Servern gespeichert sein, beispielsweise in der Datenwolke 50, von wo aus sie über ein Netz, beispielsweise das Internet, heruntergeladen werden können.

Aufgrund der im ADDD 102 vorhandenen Daten, lässt sich dieser beziehungsweise lassen sich dessen virtuellen Bauteile durch ein Ausführen des Computerprogrammproduktes 101 in einem Computersystem 111 aufrufen und als eine dreidimensionale, virtuelle Personentransportanlage darstellen. Diese kann virtuell mittels Zoomfunktionen und Bewegungsfunktionen "durchwandert" und erkundet werden. Hierbei sind auch Bewegungsabläufe, Kollisionssimulationen, statische und dynamische Festigkeitsanalysen unter Zuhilfenahme der Finiten-Elemente-Methode und interaktive Abfragen zu aktuellen charakterisierenden Eigenschaften einzelner virtueller Bauteile und Bauteilgruppen möglich. Das heißt, dass beispielsweise aus dem ADDD 102 das virtuelle umlaufend angeordnete Transportband 107, welches das Pendant des physischen Transportbandes 7 darstellt, ausgewählt und dessen aktualisierte, charakterisierende Eigenschaft wie beispielsweise eine verschleißbedingte Längenänderung im Vergleich zu seinem Neuzustand abgefragt werden kann.

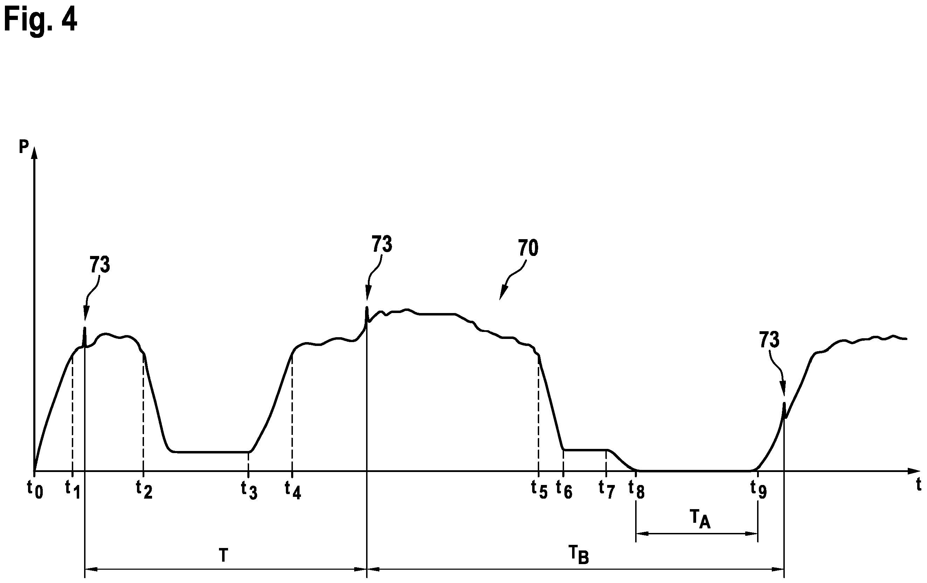

Damit mittels des ADDD 102 aussagekräftige Zustandsanalysen und Zustandssimulationen gemacht werden können, müssen insbesondere charakterisierende Eigenschaften von verschleißbehafteten Bauteilen in den virtuellen Bauteil-Datensätzen des ADDD 102 kontinuierlich oder periodisch aktualisiert werden. Diese Aktualisierungsabfragen können automatisiert durch das im Computerprogrammprodukt 101 implementierte Verfahren 100 initialisiert werden. Sie können aber auch von "Außen" das heißt über eine Eingabe zum Beispiel über die als Tastatur dargestellte Schnittstelle 53 des Computersystems 111 initialisiert werden. Die eigentliche Aktualisierung der charakterisierenden Eigenschaften erfolgt über die Schnittstelle 51 zwischen der physischen Personentransportanlage 2 und dem ADDD 102 beziehungsweise dem laufenden Computerprogramm (Verfahren 100) des Computerprogrammproduktes 101. Hierbei werden Messwerte von entsprechenden Sensoren oder Sensorsystemen der Erfassungseinrichtung 200 (siehe auch Figuren 3 und 4) abgefragt und diese Messwerte gegebenenfalls weiterverarbeitet, um zu den charakterisierenden Eigenschaften der vom Messwert beeinflussten beziehungsweise betroffenen Bauteile zu gelangen. Die Messwerte sowie die sich daraus ergebenden charakterisierenden Eigenschaften können in einem Logfile 104 abgelegt werden. Um diese Einträge historisch zu ordnen, können sie mit einer Zeitinformation 103 im Logfile 104 abgspeichert werden. Die Erfassung von Messwerten sowie deren Weiterverarbeitung, um zu charakterisierenden Eigenschaften der vom Messwert beeinflussten beziehungsweise betroffenen Bauteile zu gelangen, wird weiter unten in Zusammenhang mit den Figuren 3 bis 5 näher erläutert.

Wie in der Figur 1 schematisch dargestellt, kann ein Benutzer, beispielsweise ein Techniker, eine Abfrage über den Zustand der physischen Personentransportanlage 2 tätigen, indem er über das Computersystem 111 das Computerprogramm 100 des Computerprogrammproduktes 101 startet beziehungsweise darauf zugreift. Das Computersystem 111 kann fester Bestandteil der Vorrichtung 1 sein, es kann aber auch nur eine temporäre Zugehörigkeit annehmen, während mit ihm über die Schnittstelle 52 auf Daten des ADDD 102 zugegriffen wird.

Im vorliegenden Ausführungsbeispiel der Figur 1 hat der Techniker über Zoomfunktionen einen Bereich 60 des ADDD 102 ausgewählt. Hierbei kann auf dem als Datenausgabe dienenden Bildschirm 54 eine kleine Navigationsgrafik 55 dargestellt sein, auf der mittels eines Pointers 56 der ausgewählte Bereich 60 angezeigt wird. Beim ausgewählten Bereich 60 handelt es sich um den in der Ebene E2 vorhandenen, virtuellen Zutrittsbereich, bei welchem die virtuellen Fahrtreppenstufen 129 unter die dort angeordnete, virtuelle Kammplatte 132 einlaufen. Aufgrund des gezoomten Bereiches 60 sind lediglich die virtuellen Führungsschienen 125, die virtuelle Kammplatte 132 sowie zwei virtuelle Fahrtreppenstufen 129 des Transportbandes 107 zu sehen.

Da das physische Transportband 7 schon einige Betriebsstunden aufweist, weisen die Gelenkstellen von dessen Förderketten infolge der stetigen Relativbewegungen zwischen den Kettengliedern unter Last einen gewissen Verschleiß auf. Dieser Verschleiß führt zu einer Längung des Transportbandes 7, wodurch der Spalt zwischen zwei Fahrtreppenstufen 29 geringfügig grösser werden kann. Die verschleißbedingte Längung des Transportbandes 7 kann wie weiter unten in Zusammenhang mit den Figuren 3 bis 5 aus dem Messwerten zur Leistungsaufnahme (Strom- und Spannungsverlauf über die Zeit) beziehungsweise dem Belastungsprofil der Antriebsmaschine 33 ermittelt und auf den ADDD 102 übertragen werden, indem für die davon betroffenen virtuellen Bauteile die entsprechenden charakterisierenden Eigenschaften aktualisiert werden. Wenn die Messewerte des Belastungsprofils mit all den daraus errechneten Auswirkungen auf die davon betroffenen Bauteile auf den ADDD 102 übertragen sind, weisen auch die Bauteile des virtuellen Transportbandes 107 wie die Gelenkstellen 128 von dessen Förderketten 131 dieselben verschleißbedingten Veränderungen auf, so dass auch im ADDD 102 der Spalt zwischen zwei virtuellen Fahrtreppenstufen 129 geringfügig grösser wird.

Konkret heißt das, dass die aus dem erfassten Belastungsprofil ermittelten Veränderungen eine Verlängerung der Förderkette 131 beziehungsweise eine Veränderung des Spiels in jeder Gelenkstelle 128 bedeutet. Dieses Spiel wird beispielsweise je nach Festigkeitseigenschaften des Kettenbolzens 134 und der Kettenbuchse 123 der Gelenkstelle 28 auf den Innendurchmesser der Kettenbuchse 123 und den Außendurchmesser des Kettenbolzens 134 aufgeteilt. Demzufolge ändern sich die charakterisierende Eigenschaft "Innendurchmesser" der Kettenbuchse 123 und die charakterisierende Eigenschaft "Außendurchmesser" des Kettenbolzens 134 einer jeden Gelenkstelle 128 der Förderketten 131.

Hieraus können beispielsweise Festigkeitsberechnungen für die Kettenbolzen 134 durchgeführt werden, so dass im Rahmen der durchzuführenden Analyse nach dem erfindungsgemässen Verfahren 100 auch der aktuelle Sicherheitsfaktor der virtuellen Förderkette 131 und damit der physischen Förderkette 31 gegen Bruch ermittelt werden kann.

Der vorangehend beschriebene Verschleiß führt aber nicht nur zu einer Schwächung des Kettenbolzens 134, sondern auch zu einem größeren Spiel innerhalb der Gelenkstellen 128. Mittels dynamischer Simulationen am ADDD 102 können die Auswirkungen dieses vergrößerten Spiels beurteilt werden. Bei diesen Simulationen kann sich beispielsweise die virtuelle Fahrtreppenstufe 129 innerhalb dieses Spiels orthogonal (in der Figur 1 extrem übertrieben dargestellt) zur vorgesehenen Bewegungsrichtung Z bewegen und bei einer für diesen Fall ungünstigen Belastung F etwas mehr verkippen, als dies das normale Spiel zwischen den virtuellen Kettenrollen 127 und der virtuellen Führungsschiene 125 zulassen würde. Wenn das Spiel zu groß und das Verkippen zu stark ist, kann die führende Kante 122 der virtuellen Fahrtreppenstufe 129 mit der virtuellen Kammplatte 132 kollidieren. Dasselbe ist logischerweise auch bei der physischen Personentransportanlage 2 zu befürchten, weshalb auf Basis der vorangehend beschriebenen Simulationsergebnisse umgehend eine Wartung der physischen Personentransportanlage 2 eingeleitet werden sollte.

Wie bereits weiter oben erwähnt, können die von der Erfassungseinrichtung 200 erfassten Messwerte mit einer Zeitinformation 103 versehen und in einem Logfile 104 abgespeichert werden. Selbstverständlich kann dasselbe auch mit den charakterisierenden Eigenschaften der virtuellen Bauteile des ADDD 102 gemacht werden, so dass auch bei den charakterisierenden Eigenschaften eine rückverfolgbare Historie vorhanden ist und auf der Basis dieser Historie mittels bekannter analytischer Methoden ein Veränderungstrend der entsprechenden charakterisierenden Eigenschaften berechnet werden kann. Durch eine geeignete Extrapolation auf Basis der Historie kann der Zeitpunkt eines möglichen Schadensereignisses ermittelt und präventive Wartungsarbeiten vor diesem Zeitpunkt geplant und durchgeführt werden. Im vorangehend beschriebenen Beispiel kann die verbleibende Zeit über die Durchmesserabnahme des Kettenbolzens 134 infolge des Verschleißes extrapoliert werden, bis der vorgeschriebene Sicherheitsfaktor des Kettenbolzens 134 unterschritten wird. Ebenso ist ein möglicher Zeitpunkt für eine Stufenkollision mit der Kammplatte 132 durch die vorangehend beschriebene dynamische Simulation ermittelbar, wobei der frühere mögliche Zeitpunkt der beiden Ereignisse für den Wartungszeitpunkt bestimmend ist.

Um die dabei anfallende Datenmenge zu begrenzen, kann eine rückverfolgbare Historie auch nur mit einigen ausgewählten charakterisierenden Eigenschaften einiger ausgewählter, insbesondere Verschleißerscheinungen unterworfener Bauteile erstellt werden.

Aus Gründen der Fertigungstoleranzen der Bauteile und durch die bei der Herstellung und/oder bei der Inbetriebnahme und/oder bei einer vorangehenden Wartung gemachten Einstellungen weist nicht jede physische Personentransportanlage 2 die genau gleichen geometrischen Verhältnisse bezüglich der Bauteile und deren Einbaulage auf. Genaugenommen ist jede physische Personentransportanlage in der Gesamtheit der charakterisierenden Eigenschaften ihrer Bauteile einzigartig und dementsprechend unterscheiden sich auch alle ADDD 102 (wenn auch nur geringfügig) voneinander. Im beispielhaft ausgewählten Bereich 60 führt dies dazu, dass eine bestimmte Verschleißerscheinung (quantitativ gleich, an einem bestimmten Bauteil) bei der einen physischen Personentransportanlage 2 bereits zu einer Kollision von Fahrtreppenstufe 29 und Kammplatte führen kann, während bei einer anderen physischen Personentransportanlage 2 gleicher Auslegung noch lange keine Gefahr einer Kollision besteht. Anhand dieses Beispiels ist leicht erkennbar, dass aufgrund der Analysemöglichkeiten, die der ADDD 102 mit seinen virtuellen Bauteilen bietet, für jedes physische Bauteil einer Personentransportanlage 2 dessen Weiterverwendung, dessen Einjustierung in seinem Umfeld oder dessen Ersatz unter Verwendung des ADDD 102 ermittelt und entsprechende Wartungsarbeiten geplant werden können.

Nachfolgend soll anhand der Figuren 3 bis 5 beispielhaft gezeigt werden, wie verschleißbedingte Veränderungen an umlaufend angeordneten Bauteilen der physischen Personentransportanlage 2 erfasst und daraus charakteristische Eigenschaften von betroffenen Bauteilen ermittelt werden können. Hierzu wurde der in der Figur 2 angegebene Antriebsbereich 30 in Figur 3 vergrößert und detaillierter dargestellt.

Im Antriebsbereich 30 ist der Antriebsstrang 35 der Personentransportanlage 2 angeordnet. Dieser weist im Wesentlichen eine Antriebsmaschine 33 mit einem Untersetzungsgetriebe 32 auf. Zwischen dem Antriebskettenrad 37 und einem Getrieberitzel 38 des Untersetzungsgetriebes 32 ist eine Antriebskette 36 angeordnet. Über das Antriebskettenrad 37 ist die Förderkette 31 des Transportbandes 7 geführt und treibt dieses an. Die Förderkette 31 weist Gelenkstellen 28 auf, die jeweils aus einem Kettenbolzen 34 und einer Kettenbuchse 23 gebildet ist.

Ferner ist im Antriebsbereich 30 die Steuerung 17 der Personentransportanlage 2 untergebracht. Diese beinhaltet einen Frequenzumrichter 61. Der Frequenzumrichter 61 umfasst ein Gleichrichtermodul 62 und ein Wechselrichtermodul 63, die über einen Gleichspannungszwischenkreis 65 miteinander verbunden sind. Das Gleichrichtermodul 62 ist mit einem elektrischen Versorgungsnetz 68 verbunden und das Wechselrichtermodul 63 ist elektrisch mit der Antriebsmaschine 33 verbunden. Der Frequenzumrichter 61 verfügt ferner über ein Steuerungsmodul 64, über das das Wechselrichtermodul 63 und das Gleichrichtermodul 62 angesteuert werden. Das Steuerungsmodul 64 ist mit einer Steuereinheit 66 der Steuerung 17 verbunden. Wie symbolisch mit zwei Anzeigeskalen I, U, angedeutet, empfängt eine in der Steuereinheit 66 integrierte Erfassungseinrichtung 200 Informationen beziehungsweise Messwerte vom Steuerungsmodul 64 des Frequenzumrichters 61 über den Spannungsverlauf und den Stromverlauf, der an die Antriebsmaschine 33 abgegeben wurde.

Die einzelnen Messwerte aus Strom I und Spannung U ergeben als Leistung P verrechnet und in chronologischer Reihenfolge aufgetragen, das Belastungsprofil 70 der bewegten mechanischen Komponenten, insbesondere des Transportbandes 7 und des Antriebsstranges 35. In der Figur 4 ist beispielhaft ein solches Belastungsprofil 70 der von der Antriebsmaschine 33 aufgenommenen Leistung P über die Zeit t dargestellt.

Um das Belastungsprofil 70 näher zu erklären, sind in der Figur 4 auf der horizontalen Zeitachse t einige markante Zeitpunkte to bis t₉ eingetragen. Der Zeitpunkt to stellt den Beginn der Messwerterfassung dar, beispielsweise der Zeitpunkt der Inbetriebnahme der Personentransportanlage 2 nach deren Fertigstellung und Installation im Bauwerk 5. Der Anstieg der Belastungsprofil-Kurve deutet daraufhin, dass das Transportband 7 bis zum Zeitpunkt t₁ anfährt und zunehmend durch Benutzer belegt wird. Beim Zeitpunkt t₂ haben alle Benutzer das Transportband verlassen, weshalb durch die Steuerung eine sogenannte Schleichfahrt eingeleitet wird. Ab dem Zeitpunkt t₃ wird die Schleichfahrt aufgehoben, da offensichtlich wieder Benutzer das Transportband betreten und die Steuerung das Transportband wieder auf die Nominalgeschwindigkeit bringt, welche zum Zeitpunkt t₄ erreicht ist. Aus der zwischen Zeitpunkt t₄ und Zeitpunkt t₅ vorhandenen Kurve ist ersichtlich, dass über eine längere Betriebszeit das Transportband sehr unterschiedlich beladen ist. Ab dem Zeitpunkt t₅ leitet die Steuerung bis zum Zeitpunkt t₆ wieder die Schleichfahrt ein und bremst mangels Benutzern ab dem Zeitpunkt t₇ das Stufenband bis zum Stillstand ab, der zum Zeitpunkt t8 erreicht wird. Diese Stillstandsphase wird zum Zeitpunkt t₉ wieder aufgehoben, da weitere Benutzer mit der Personentransportanlage fahren möchten.

Das Belastungsprofil 70 kann auch auf besondere Ereignisse hin ausgewertet werden. So können beispielsweise periodisch Peaks 73 auftreten, wie sie in der Figur 4 dargestellt sind. Solch periodisch auftretende Peaks 73 sind ein starker Hinweis, dass an der zugeordneten Stelle des Transportbandes 7 eine Defekt vorliegt, beispielsweise ein Bruch oder Lagerschaden einer Stufenrolle oder Kettenrolle, ein Bruch der Stufenachse und dergleichen mehr. Zu beachten ist hierbei, dass die Stillstandphasen T_{A} die Periodendauer T zwischen den Peaks 73 verlängern, so dass zwischen zwei Peaks 73 eine entsprechend längere Periodendauer T_{B} vorhanden ist.

Alternativ oder ergänzend können wie in der Figur 2 dargestellt, in den Zutrittsbereichen der Personentransportanlage 2 auch Lastsensoren 75 als Erfassungseinrichtung 200 angeordnet sein, die die Lasten beim Zutritt erfassen, welche das Transportband 7 zu befördern hat. Die Messwerte der Lastsensoren 75 ergeben in chronologischer Reihenfolge aufgetragen, wiederum ein Belastungsprofil 70 des Transportbandes 2.

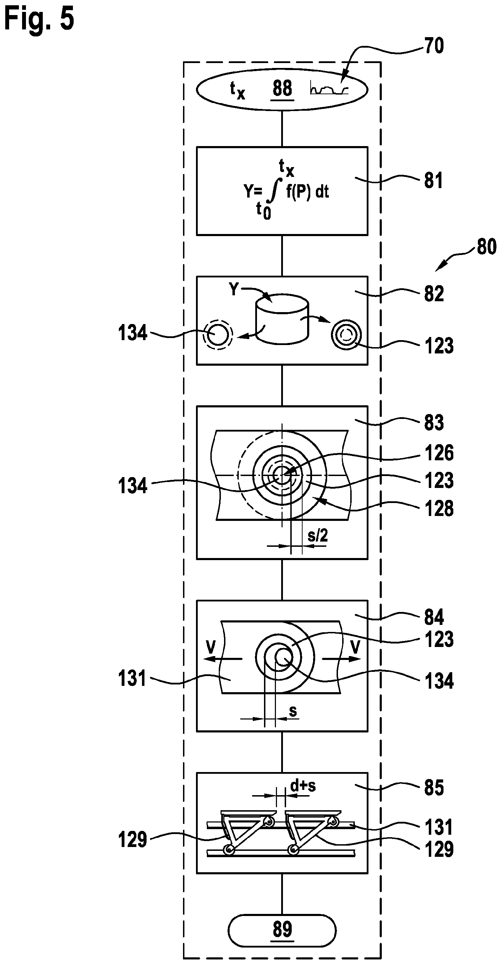

Ebenso kann die Erfassungseinrichtung 200 auch Radarsensoren 76 oder Lichtschranken 77 aufweisen, durch welche Personen erfasst werden, die die Personentransportanlage 2 betreten. Die erfassten Personen werden beispielsweise mittels im Regelsatz 80 (siehe Beschreibung zur Figur 5) hinterlegten Belastungsanalysen mit einer durchschnittlichen, angenommenen Masse (beispielsweise 85kg) in ein Belastungsprofil 70 umgerechnet.

Wie bereits in der Figur 1 dargestellt, kommuniziert die Steuerung 17 über die Schnittstelle 51 mit dem in der Datenwolke 50 installierten ADDD 102, wodurch eine Übermittlung der von der Erfassungseinrichtung 200 erfassten Messwerte, beziehungsweise Messdaten, beziehungsweise das Belastungsprofil 70, erfolgen kann.

Im ADDD 102 erfolgt unter Anwendung des in der Figur 5 dargestellten Regelsatzes 80 und unter Verwendung des Belastungsprofils 70 bei den betroffenen Bauteilmodell-Datensätzen eine Aktualisierung ihrer charakterisierenden Eigenschaften. Da im Regelsatz 80 zumindest für eine große Anzahl von Bauteilmodell-Datensätzen des ADDD 102 Umrechnungsregeln und Umrechnungsformeln zur Aktualisierung ihrer charakterisierenden Eigenschaften hinterlegt sind, beschränken sich die Ausführungen in der Beschreibung zur Figur 5 beispielhaft auf die in der Figur 1 dargestellte virtuelle Gelenkstelle 128 beziehungsweise auf deren virtuellen Kettenbolzen 134 und deren virtuelle Kettenbuchse 123.

Wie in der Figur 5 dargestellt, besteht als Ausgangslage 88 zur Anwendung des Regelsatzes 80 ein von der Erfassungseinrichtung 200 durch Messwerte kontinuierlich fortschreibendes Belastungsprofil 70 sowie ein durch einen Benutzer oder durch die Steuerung 17 getriggerten Aktualisierungszeitpunkt tₓ. Das Belastungsprofil 70 kann in einem ersten Regelverfahrensschritt 81 über die gesamte, bisher abgelaufene Betriebszeit to bis tₓ zu einer Belastungssumme Y aufsummiert beziehungsweise integriert werden.

Mittels dieser Belastungssumme Y können in einem zweiten Regelverfahrensschritt 82 entsprechende, auf Erfahrungswerten und/oder Berechnungen basierende Verschleißwerte für die vom Belastungsprofil 70 betroffenen Bauteilmodell-Datensätze bestimmt werden. Die Erfahrungswerte können aus Versuchen und bestehenden Personentransportanlagen extrahiert und in einer Datenbank, beispielsweise in der Datenwolke 50 gespeichert sein. Ausgehend von den an der physischen Personentransportanlage 2 nach deren Zusammenbau und Installation in einem Bauwerk 5 durch Messen ermittelten, charakterisierenden Eigenschaften können mit diesen Verschleißwerten hernach die zur Aktualisierung vorgesehenen, neuen charakterisierenden Eigenschaften ermittelt werden. Im konkreten Beispiel entsteht durch die Relativbewegungen in der Gelenkstelle 28 der physischen Förderkette 31 Verschleiß an deren Kettenbuchse 23 und deren Kettenbolzen 34. Anders gesagt heißt das, dass die charakterisierende Eigenschaft "Außendurchmesser" des Kettenbolzens 34 und die charakterisierende Eigenschaft "Innendurchmesser" der Kettenbuchse 23 abhängig von der Belastungssumme Y verschleißbedingt verändert wird.

Wie im zweiten Regelverfahrensschritt 82 symbolisch dargestellt, wird die charakterisierende Eigenschaft "Außendurchmesser" des virtuellen Kettenbolzens 134 aktualisiert, indem der ursprüngliche Ist-Wert, welcher am physischen Kettenbolzen 34 gemessen wurde und der durch eine unterbrochene Linie dargestellt ist, durch den ermittelten Verschleißwert reduziert (dargestellt mit ausgezogener Linie) wird. Dasselbe erfolgt mit dem Innendurchmesser des Bauteilmodell-Datensatzes der virtuellen Kettenbuchse 123, der logischerweise verschleißbedingt grösser wird.

Im dritten Regelverfahrensschritt 83 ersetzen die aktualisierten charakterisierenden Eigenschaften der virtuellen Kettenbuchse 123 und des virtuellen Kettenbolzens 134 deren alte charakterisierenden Eigenschaften, wodurch der ADDD 102 aktualisiert wird.

Da die physische Förderkette 31 vorgespannt ist, verteilt sich das durch den Verschleiß entstandene Spiel s nicht wie im dritten Regelverfahrensschritt 83 dargestellt, konzentrisch zur Schwenkachse 126 der virtuellen Gelenkstelle 128. Deshalb muss im anschließenden vierten Regelverfahrensschritt 84 ein der Vorspannungskraftrichtung V entsprechende Verschiebung des virtuellen Kettenbolzens 134 zur virtuellen Kettenbuchse 123 erfolgen, und zwar in allen Gelenkstellen 128 der virtuellen Förderkette 31. Dadurch wird im ADDD 102 eine verschleißbedingte Längung der virtuellen Förderkette 131 abgebildet.

Im fünften Regelverfahrensschritt 85 werden noch die an der virtuellen Förderkette 131 angeordneten virtuellen Bauteile entsprechend den neuen Positionen der virtuellen Gelenkstellen 128 ausgerichtet, so dass beispielsweise der Spalt d zwischen zwei virtuellen Fahrtreppenstufen 129 um das Spiel s vergrößert wird.

Mit der Neupositionierung der von der Längung der virtuellen Förderkette 131 betroffenen virtuellen Bauteile findet die Anwendung des Regelsatzes 80 bezüglich des vorliegenden Beispiels zur virtuellen Gelenkstelle 128 seine Abschluss 89.

Aus den vorangehenden Ausführungen wird deutlich, dass der Regelsatz 80 nicht eine einfache Formel, sondern ein umfangreiches Computerprogramm beziehungsweise ein Teil eines Computerprogramms des ADDD 102 ist. Im Regelsatz 80 kann beispielsweise eine Datenbank mit Verschleißwerten hinterlegt sein, es können aber auch eine Vielzahl von Algorithmen, Berechnungsmethoden aus dem Gebiet der Physik, der technischen Mechanik und der Festigkeitslehre, sowie stochastische Berechnungsmetoden implementiert sein. Selbstverständlich kann der Regelsatz 80 auch eine Zugriffsregelung auf externe Computerprogramme und Datenbanken beinhalten, in denen diese Algorithmen, Berechnungsmethoden und Erfahrungswerte implementiert sind.

Der Regelsatz 80 muss auch nicht zwingend ein einziges Computerprogramm sein. Der Regelsatz 80 kann dezentralisiert als mehrere Teilcomputerprogramme vorhanden sein. Vorzugsweise ist in den einzelnen Bauteilmodell-Datensätzen hinterlegt, welche Berechnungsgrundlagen aus dem Regelsatz 80 bei seinen charakteristischen Eigenschaften zur Anwendung kommen. Vorteilhaft ist insbesondere, wenn in jedem Bauteilmodell-Datensatz das zugehörende Teilcomputerprogramm des Regelsatzes 80 implementiert ist.

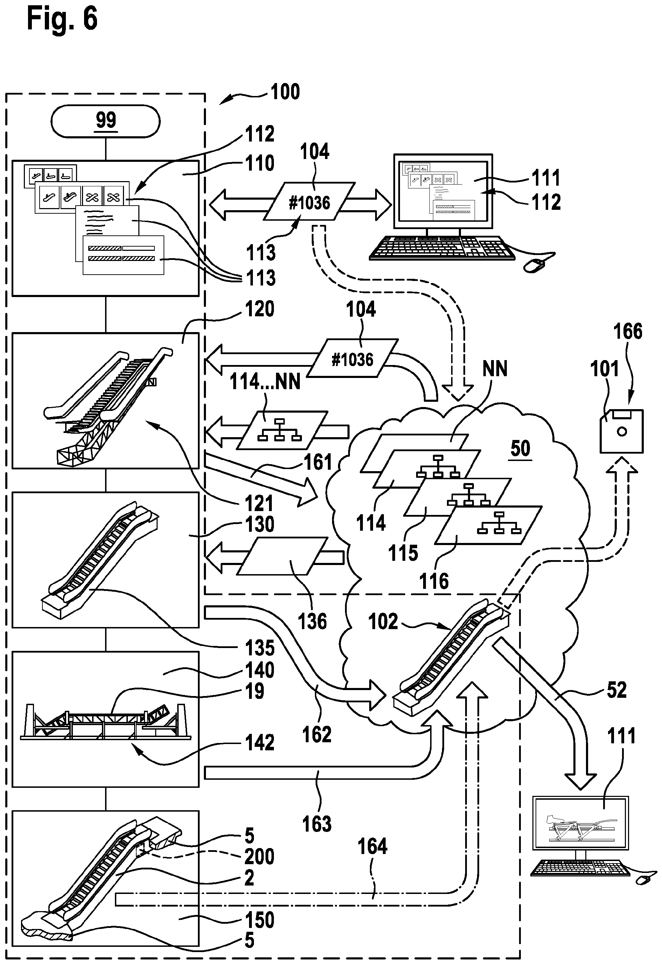

Figur 6 veranschaulicht anhand eines mit zusätzlichen Informationen versehenen Diagramms die wichtigsten Verfahrensschritte des erfindungsgemässen Verfahrens 100 (markiert mittels unterbrochener Linie) bei der Erstellung eines ADDD 102, die Produktion einer physischen Personentransportanlage 2 im Rahmen dieser Erstellung sowie die Inbetriebnahme der physischen Personentransportanlage 2 und die Aktualisierung des ADDD 102 aufgrund des erfassten Belastungsprofils 70. Die hauptsächlichen Verfahrensschritte des Verfahrens 100 sind gegliedert in:
- im ersten Verfahrensschritt 110 eine Erfassung der kundenspezifischen Konfigurierungsdaten 113;
- im zweiten Verfahrensschritt 120 eine Erstellung eines Kommissionierungs-Digitaler-Doppelgänger-Datensatzes unter Einbeziehung von Bauteilmodell-Datensätzen und den kundenspeifischen Konfigurierungsdaten 113;
- im dritten Verfahrensschritt 130 eine Überführung des Kommissionierungs-Digitaler-Doppelgänger-Datensatzes in einen Fertigungs-Digitaler-Doppelgänger-Datensatz;
- im vierten Verfahrensschritt 140 eine Fertigung der physischen Personentransportanlage 2 anhand des Fertigungs-Digitaler-Doppelgänger-Datensatzes; sowie
- im fünften Verfahrensschritt 150 eine Installation der physischen Personentransportanlage 2 in einem Bauwerk 5 und die Aktualisierung des ADDD 102.

Sämtliche Datenverarbeitung und die Datenspeicherung sowie die schrittweise Erstellung des ADDD 102 erfolgt hierbei beispielhaft über die Datenwolke 50.

Die Ausgangslage 99 zur Ausführung des erfindungsgemässen Verfahrens 100 kann eine Planung und spätere Erstellung oder ein Umbau eines Bauwerkes 5 wie beispielsweise eines Shoppingcenters, eines Flughafengebäudes, einer U-Bahnstation und dergleichen mehr sein. Hierbei ist gegebenenfalls auch eine als Fahrtreppe oder Fahrsteig ausgestaltete Personentransportanlage 2 vorgesehen. Aufgrund des Einsatzprofils und den Einbauverhältnissen wird die gewünschte Personentransportanlage 2 konfiguriert.

Dazu kann beispielsweise ein Internetbasiertes Konfigurierungsprogramm zur Verfügung stehen, welches dauerhaft oder temporär in einem Computersystem 111 installiert ist. Mittels verschiedener Eingabemasken 112 werden kundenspezifische Konfigurierungsdaten 113 abgefragt und in einem Logfile 104 unter einer Identifizierungsnummer gespeichert. Das Logfile 104 kann beispielsweise in der Datenwolke 50 gespeichert werden. Optional kann dem Architekten des Bauwerkes 5 anhand seiner kundenspezifischen Konfigurierungsdaten 113 ein digitales Hüllenmodell zur Verfügung gestellt werden, welches er zwecks Visualisierung des geplanten Gebäudes in sein digitales Gebäudemodell einfügen kann. Als kundenspezifische Konfigurierungsdaten 113 werden beispielsweise Koordinaten des vorgesehenen Einbauraumes, die erforderliche maximale Förderleistung, Förderhöhe, Einsatzumfeld, etc. abgefragt.

Wenn der Architekt mit der durch ihn konfigurierten Personentransportanlage 2 zufrieden ist, kann er diese unter Angabe der kundenspezifischen Konfigurierungsdaten 113 beispielsweise durch einen Hinweis auf die Identifizierungsnummer oder den Identifizierungscode des Logfiles 104 beim Hersteller in Auftrag geben.

Bei einem Bestellungseingang, dargestellt durch den zweiten Verfahrensschritt 120, der auf ein Logfile 104 referenziert wird, wird zunächst ein Digitaler-Doppelgänger-Datensatz 121 erstellt, der eine Soll-Konfiguration angibt. Beim Erstellen des Digitaler-Doppelgänger-Datensatzes 121 werden Bauteilmodell-Datensätze 114, 115, ..., NN verwendet, die für eine Fertigung der physischen Bauteile vorgesehen sind. Das heißt, dass für jedes physische Bauteil ein Bauteilmodell-Datensatz 114, 115, ..., NN beispielsweise in der Datenwolke 50 abgespeichert ist, der alle charakterisierenden Eigenschaften (Abmaße, Toleranzen, Werkstoffeigenschaften, Oberflächengüte, Schnittstelleninformationen zu weiteren Bauteilmodell-Datensätzen, etc.) dieses Bauteils in einer Soll-Konfiguration enthält.

Mittels der kundenspezifischen Konfigurierungsdaten 113 werden nun die zur Erstellung des Digitaler-Doppelgänger-Datensatz 121 erforderlichen Bauteilmodell-Datensätze 114, 115, ..., NN ausgewählt sowie deren Anzahl und Anordnung im dreidimensionalen Raum bestimmt. Anschließend werden diese Bauteilmodell-Datensätze 114, 115, ..., NN mittels ihrer Schnittstelleninformationen zu einem entsprechenden Digitaler-Doppelgänger-Datensatz 121 der Personentransportanlage 2 vereinigt. Hierbei ist es offensichtlich, dass eine Fahrtreppe oder ein Fahrsteig aus einigen tausend Einzelteilen besteht (repräsentiert durch die Bezugszeichen ..., NN) und dementsprechend ebenso viele Bauteilmodell-Datensätze 114, 115, ..., NN zur Erstellung eines Digitaler-Doppelgänger-Datensatz 121 herangezogen und verarbeitet werden müssen. Der Digitaler-Doppelgänger-Datensatz 121 weist für alle herzustellenden beziehungsweise zu beschaffenden physischen Bauteile Soll-Daten auf, welche charakterisierende Eigenschaften der zum Bau erforderlichen Bauteile der Personentransportanlage 2 in einer Soll-Konfiguration wiedergeben. Der Digitaler-Doppelgänger-Datensatz 121 kann wie durch den Pfeil 161 dargestellt, in der Datenwolke 50 abgespeichert werden und bildet gewissermaßen auch die Ausgangsbasis des ADDD 102.

Im dritten Verfahrensschritt 130 wird durch ein Ergänzen des digitalen, dreidimensionalen Doppelgänger-Datensatzes 121 mit produktionsspezifischen Daten 136 hernach der Kommissionierungs-Digitaler-Doppelgänger-Datensatz 135 erzeugt, der alle für die Produktion der kommissionierten Personentransportanlage 2 erforderlichen Fertigungsdaten enthält. Solche produktionsspezifischen Daten 136 können beispielsweise den Produktionsstandort, den an diesem Produktionsstandort verwendbaren Werkstoff, die zur Produktion des physischen Bauteiles eingesetzten Fertigungsmittel, Durchlaufzeiten und dergleichen mehr enthalten. Dieser Ergänzungsschritt wird, wie durch den Pfeil 162 dargestellt, am noch im Aufbau befindlichen ADDD 102 vollzogen.

Der Kommissionierungs-Digitaler-Doppelgänger-Datensatz 135 kann gemäss dem vierten Verfahrensschritt 140 anschließend in den Fertigungsanlagen 142 des Herstellerwerkes (hierfür stellvertretend die Abbildung einer Schweißlehre für ein Tragwerk 19) verwendet werden, um die Produktion der physischen Bauteile (hierfür stellvertretend die Abbildung eines Tragwerks 19) der physischen Personentransportanlage 2 zu ermöglichen. Im Kommissionierungs-Digitaler-Doppelgänger-Datensatz 135 sind ebenfalls die Montageschritte zur physischen Personentransportanlage 2 definiert. Bei und nach der Fertigung der physischen Bauteile sowie beim Zusammenbau der daraus entstehenden, physischen Personentransportanlage 2 werden zumindest ein Teil der charakterisierenden Eigenschaften von Bauteilen und montierten Baugruppen beispielsweise durch Vermessen und zerstörungsfreie Prüfverfahren erfasst und diese den entsprechenden virtuellen Bauteilen zugeordnet, in den noch unfertigen ADDD 102 übertragen. Hierbei ersetzen als charakterisierende Eigenschaften die an den physischen Bauteilen gemessenen IST-Daten die zugeordneten Soll-Daten des Kommissionierungs-Digitaler-Doppelgänger-Datensatzes 135. Mit dieser durch den Pfeil 163 dargestellten Übertragung wandelt sich mit fortlaufendem Produktionsfortschritt der Kommissionierungs-Digitaler-Doppelgänger-Datensatz 135 immer mehr hin zum ADDD 102. Dieser ist jedoch immer noch nicht ganz komplett, sondern bildet zuerst einen sogenannte Fertigstellungs-Digitaler-Doppelgänger-Datensatz.

Nach ihrer Fertigstellung kann die physische Personentransportanlage 2 wie im fünften Verfahrensschritt 150 dargestellt, in das nach den Plänen des Architekten erstellte Bauwerk 5 eingebaut werden. Da beim Einbau gewisse Einstellarbeiten ausgeführt werden müssen und schon bei der ersten Inbetriebnahme Betriebsdaten entstehen, werden auch diese Daten auf den Fertigstellungs-Digitaler-Doppelgänger-Datensatz übertragen und in charakterisierende Eigenschaften der davon betroffenen virtuellen Bauteile umgerechnet. Mit dieser durch den strichpunktierten Pfeil 164 dargestellten Aktualisierung wandelt sich der Fertigstellungs-Digitaler-Doppelgänger-Datensatz in den ADDD 102, der ebenso wie die physische Personentransportanlage 2 die volle Einsatzbereitschaft erreicht. Ab diesem Zeitpunkt kann der ADDD 102 jederzeit in das Computersystem 111 geladen und zur detaillierten Analyse des Zustandes der physischen Personentransportanlage 2 eingesetzt werden.

Der fünfte Verfahrensschritt 150 bildet jedoch nicht einen eigentlichen Abschluss des erfindungsgemässen Verfahrens 100. Dieser Abschluss erfolgt erst mit dem Lebensdauerende der physischen Personentransportanlage 2, wobei hier ein letztes Mal die Daten des ADDD 102 nutzbringend für den Entsorgungsvorgang der physischen Bauteile eingesetzt werden können.

Der ADDD 102 wird wie weiter oben ausführlich beschrieben und durch den strichpunktierten Pfeil 164 symbolisiert, während der gesamten Lebensdauer der Personentransportanlage 2 kontinuierlich und/oder periodisch durch die Übertragung von Messdaten aktualisiert. Diese Messdaten können wie bereits erwähnt, sowohl von der Erfassungseinrichtung 200, als auch durch eine Eingabe beispielsweise durch das Wartungspersonal erfasst und auf den ADDD 102 übertragen werden. Selbstverständlich lässt sich der ADDD 102 zusammen mit den zur Arbeit mit dem ADDD102 erforderlichen Programmanweisungen 166 auf einem beliebigen Speichermedium als Computerprogrammprodukt 101 speichern.

Obwohl die Figuren 1 bis 6 unterschiedliche Aspekte der vorliegenden Erfindung betreffen und diese am Beispiel einer Fahrtreppe ausführlich beschrieben wurden, ist es offensichtlich, dass die beschriebenen Verfahrensschritte und eine entsprechende Vorrichtung gleichermaßen auch für Fahrsteige Anwendung finden. Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können, wobei der Schutzumfang der Erfindung durch die folgenden Ansprüche definiert ist. Bezugszeichen in den Ansprüchen sind nicht als Einschränkung anzusehen.

## Patentansprüche

1. Verfahren (100) zum Überwachen eines Zustands einer physischen Personentransportanlage (2) unter Verwendung eines Aktualisierter-Digitaler-Doppelgänger-Datensatzes ADDD (102), welcher charakterisierende Eigenschaften von Bauteilen der physischen Personentransportanlage (2) in maschinen-verarbeitbarer Weise umfasst, wobei
• die physische Personentransportanlage (2) ein umlaufend angeordnetes Transportband (7) aufweist;
• der ADDD (102) aus Bauteilmodell-Datensätzen (114 - NN) aufgebaut ist, die Daten umfassen, welche durch Messen charakterisierender Eigenschaften an der physischen Personentransportanlage (2) nach deren Zusammenbau und Installation in einem Bauwerk (5) ermittelt wurden;
• die physische Personentransportanlage (2) zudem mindestens eine Erfassungseinrichtung (200) aufweist, welche ein Belastungsprofil (70) des Transportbandes (7, 11, 31, 36) während des Betriebes erfasst;
• dieses Belastungsprofil (70) als Messdaten auf den ADDD (102) übertragen wird und unter Verwendung eines Regelsatzes (80) charakterisierende Eigenschaften der von den übertragenen Messdaten betroffenen Bauteilmodell-Datensätze (114 - NN) neu ermittelt werden;
• anschließend die charakterisierenden Eigenschaften der betroffenen Bauteilmodell-Datensätze (114 - NN) mit den neu ermittelten, charakterisierenden Eigenschaften aktualisiert werden;
und mittels der Überwachung, Veränderungen und Veränderungstrends der aktualisierten charakterisierenden Eigenschaften des umlaufend angeordneten Transportbandes (7) und deren Einfluss auf die Bauteile des Transportbandes (7) und auf die mit diesen Bauteilen in Interaktion stehenden Bauteile mittels des ADDD (102) durch Berechnungen und/oder durch statische und dynamische Simulationen verfolgt und beurteilt werden.

2. Verfahren (100) nach Anspruch 1 wobei das von der Erfassungseinrichtung (200) erfasste Belastungsprofil (70) die von der Antriebsmaschine (33) erbrachte Antriebsleistung über die Betriebszeit repräsentiert und aus dem erfassten Stromverlauf (U) und dem Spannungsverlauf (I) der Antriebsmaschine (33) unter der Berücksichtigung der Antriebsmaschinen-Temperatur errechnet wird.

3. Verfahren (100) nach Anspruch 2 wobei das erfasste Belastungsprofil (70) auf periodisch auftretende Peaks (73) untersucht wird und beim Auftreten von Peaks (37) diese einer Stelle des Transportbandes (7) zugeordnet werden.

4. Verfahren (100) nach Anspruch 1, wobei die Erfassungseinrichtung (200) ein Radarsensor (76) oder eine Lichtschranke (77) ist, durch welche Personen erfasst werden, die die Personentransportanlage (2) betreten, wobei die erfassten Personen in ein Belastungsprofil (70) umgerechnet werden.

5. Verfahren (100) nach Anspruch 1, wobei die Erfassungseinrichtung (200) ein in der physischen Personentransportanlage (2) angeordneter Lastsensor (75) ist, durch welchen Lasten erfasst werden, die die Personentransportanlage (2) fördert, wobei diese in ein Belastungsprofil (70) umgerechnet werden.

6. Verfahren (100) nach einem der vorangehenden Ansprüche, wobei mittels des Regelsatzes (80) das Belastungsprofil (70) über die gesamte Betriebszeit zu einer Belastungssumme (Y) aufsummiert beziehungsweise integriert wird und der Belastungssumme (Y) entsprechende, auf Erfahrungswerten basierende Verschleißwerte für die vom Belastungsprofil (70) betroffenen Bauteilmodell-Datensätze (114 - NN) extrahiert werden, und wobei mit diesen, ausgehend von den an der physischen Personentransportanlage (2) nach deren Zusammenbau und Installation in einem Bauwerk (5) durch Messen ermittelten, charakterisierenden Eigenschaften, die zur Aktualisierung vorgesehenen, neuen charakterisierenden Eigenschaften ermittelt werden.

7. Verfahren (100) nach einem der vorangehenden Ansprüche, wobei die von der Erfassungseinrichtung (200) übermittelten Messdaten und/oder die daraus ermittelten, charakterisierenden Eigenschaften mit einer Zeitinformation (103) in einem Logfile (104) abgespeichert werden.

8. Verfahren (100) nach Anspruch 6 wobei mittels der im Logfile (104) gespeicherten Messdaten und/oder charakterisierenden Eigenschaften sowie von im Logfile (104) gespeicherten Betriebsdaten mittels statistischer Methoden ein Veränderungstrend der Messwerte bei einer vorgegebenen Förderlast des Transportbandes (2) und/oder der charakterisierenden Eigenschaften ermittelt wird.

9. Verfahren (100) nach einem der vorangehenden Ansprüche, wobei das Überwachen des Zustandes der physischen Personentransportanlage (2) ein Simulieren zukünftiger charakterisierender Eigenschaften der physischen Personentransportanlage (2) unter Verwendung des ADDD (102) umfasst.

10. Verfahren (100) nach einem der vorangehenden Ansprüche, ferner umfassend ein Erstellen des ADDD (102);
wobei das Erstellen des ADDD (102) umfasst:
• Erstellen eines Kommissionierungs-Digitaler-Doppelgänger-Datensatzes (135) mit Soll-Daten, welche charakterisierende Eigenschaften von Bauteilen der Personentransportanlage (2) in einer Soll-Konfiguration wiedergeben;
• Erstellen eines Fertigstellungs-Digitaler-Doppelgänger-Datensatzes basierend auf dem Kommissionierungs-Digitaler-Doppelgänger-Datensatz (135) durch Messen von Ist-Daten, welche charakterisierende Eigenschaften von Bauteilen der physischen Personentransportanlage (2) in der tatsächlichen Konfiguration der Personentransportanlage (2) direkt nach deren Zusammenbau und Installation in einem Bauwerk (5) wiedergeben und Ersetzen von Soll-Daten in dem Kommissionierungs-Digitaler-Doppelgänger-Datensatz (135) durch entsprechende Ist-Daten; und
• Erstellen des ADDD (102) basierend auf dem Fertigstellungs-Digitaler-Doppelgänger-Datensatz durch Aktualisieren des Fertigstellungs-Digitaler-Doppelgänger-Datensatzes während des Betriebs der physischen Personentransportanlage (2) unter Berücksichtigung des durch die Erfassungseinrichtung (200) erfassten Belastungsprofils (70).

11. Verfahren (100) nach Anspruch 10, wobei das Erstellen des Kommissionierungs-Digitaler-Doppelgänger-Datensatzes (135) ein Erstellen eines Digitaler-Doppelgänger-Datensatzes (121) aus Bauteilmodell-Datensätzen (114, ..., NN) unter Berücksichtigung von kundenspezifischen Konfigurierungsdaten (113), sowie ein Erstellen von Fertigungsdaten durch Modifizieren des Digitaler-Doppelgänger-Datensatzes (121) unter Berücksichtigung von produktionsspezifischen Daten (136), umfasst.

12. Vorrichtung (1) zum Überwachen eines Zustands einer physischen Personentransportanlage (2), **dadurch gekennzeichnet, dass** die Vorrichtung umfasst:
• einen aus Bauteilmodell-Datensätzen (114 - NN) aufgebauter ADDD (102), welcher charakterisierende Eigenschaften von Bauteilen der physischen Personentransportanlage (2) in einer tatsächlichen Konfiguration der physischen Personentransportanlage (2) nach deren Zusammenbau und Installation in einem Bauwerk (5) in maschinen-verarbeitbarer Weise wiedergibt; sowie
• mindestens eine Erfassungseinrichtung (200), durch welche ein Belastungsprofil (70) eines Transportbandes (7) der Personentransportanlage (2) während des Betriebes erfassbar ist;
• wobei dieses Belastungsprofil (70) als Messdaten zwecks Aktualisierung vorhandener Daten auf den ADDD (102) übertragbar sind und wobei unter Verwendung eines Regelsatzes (80) charakterisierende Eigenschaften der von den übertragenen Messdaten betroffenen Bauteilmodell-Datensätze (114 - NN) neu ermittelbar und diese mit den neu ermittelten, charakterisierenden Eigenschaften aktualisierbar sind;
und mittels statischer und dynamischer Simulationen am ADDD (102) die Veränderungen und Veränderungstrends der charakterisierenden Eigenschaften von dessen umlaufend angeordnetem virtuellen Transportband (107) und den Auswirkungen auf mit diesem Bauteil (107) in Interaktion stehenden virtuellen Bauteilen (129, 132) der Personentransportanlage verfolgbar und beurteilbar sind.

13. Physische Personentransportanlage (2), umfassend eine Vorrichtung (1) gemäß Anspruch 12.

14. Computerprogrammprodukt (101), umfassend maschinenlesbare Programmanweisungen (166), welche bei Ausführung auf einer programmierbaren Vorrichtung (50, 111) die Vorrichtung (50, 111) zum Durchführen oder Steuern eines Verfahrens (100) gemäß einem der Ansprüche 1 bis 11 veranlassen.

15. Computerlesbares Medium mit einem darauf gespeicherten Computerprogrammprodukt (101) gemäß Anspruch 14.

## Claims

1. Method (100) for monitoring a state of a physical passenger transport system (2) using an updated digital dataset double UDDD (102) which comprises characterizing properties of components of the physical passenger transport system (2) in a machine-processable manner, wherein
• the physical passenger transport system (2) has a circulating conveyor belt (7);
• the UDDD (102) is constructed from component model datasets (114-NN) that comprise data which were determined by measuring characterizing properties on the physical passenger transport system (2) after the assembly and installation thereof in a structure (5);
• the physical passenger transport system (2) also has at least one detection device (200) which detects a load profile (70) of the conveyor belt (7, 11, 31, 36) during operation;
• this load profile (70) is transmitted as measurement data to the UDDD (102) and, using a set of rules (80), characterizing properties of the component model datasets (114 - NN) affected by the transmitted measurement data are redetermined;
• the characterizing properties of the affected component model datasets (114 - NN) are then updated with the redetermined, characterizing properties;
and, by means of the monitoring, changes and change trends in the updated characterizing properties of the circulating conveyor belt (7) and their influence on the components of the conveyor belt (7) and on the components interacting with these components can be tracked and evaluated by means of the UDDD (102) by calculations and/or by static and dynamic simulations.

2. Method (100) according to claim 1, wherein the load profile (70) detected by the detection device (200) represents the drive power generated by the drive machine (33) over the operating time and is calculated from the detected current curve (U) and the voltage curve (I) of the drive machine (33), taking into account the drive machine temperature.

3. Method (100) according to claim 2, wherein the detected load profile (70) is examined for periodically occurring peaks (37) and, when peaks (73) occur, these are assigned to a point on the conveyor belt (7).

4. Method (100) according to claim 1, wherein the detection device (200) is a radar sensor (76) or a light barrier (77), by means of which passengers that enter the passenger transport system (2) are detected, wherein the detected passengers are converted into a load profile (70).

5. Method (100) according to claim 1, wherein the detection device (200) can be a load sensor (75) arranged in the physical passenger transport system (2), by means of which loads that are conveyed by the passenger transportation system (2) are detected, wherein said loads are converted into a load profile (70).

6. Method (100) according to any of the preceding claims, wherein, by means of the set of rules (80), the load profile (70) over the entire operating time is added up or integrated to form a load sum (Y), and wear values for the component model datasets (114 - NN) affected by the load profile (70) are extracted, which wear values correspond to the load sum (Y) and are based on empirical values, and wherein, proceeding from the characterizing properties determined by measurement on the physical passenger transport system (2) after the assembly and installation thereof in a structure (5), the new characterizing properties intended for updating are determined using said wear values.

7. Method (100) according to any of the preceding claims, wherein the measurement data transmitted by the detection device (200) and/or the characterizing properties determined therefrom can be stored in a log file (104) with time information (103).

8. Method (100) according to claim 6, wherein a change trend of the measured values is determined in the case of a predetermined conveying load of the conveyor belt (2) and/or the characterizing properties by means of statistical methods using the measurement data and/or characterizing properties stored in the log file (104) and from operating data stored in the log file (104).

9. Method (100) according to any of the preceding claims, wherein monitoring the state of the physical passenger transport system (2) comprises simulating future characterizing properties of the physical passenger transport system (2) using the UDDD (102).

10. Method (100) according to any of the preceding claims, further comprising a creation of the UDDD (102);
wherein creating the UDDD (102) comprises:
• creating a commissioning digital dataset double (135) with target data which reproduce characterizing properties of components of the passenger transport system (2) in a target configuration;
• creating a completion digital dataset double based on the commissioning digital dataset double (135) by measuring actual data which reproduce characterizing properties of components of the physical passenger transport system (2) in the actual configuration of the passenger transport system (2) immediately after the assembly and installation thereof in a structure (5), and replacing target data in the commissioning digital dataset double (135) with corresponding actual data; and
• creating the UDDD (102) based on the completion digital dataset double by updating the completion digital dataset double during operation of the physical passenger transport system (2) taking into account the load profile (70) detected by the detection device (200).

11. Method (100) according to claim 10, wherein creating the commissioning digital dataset double (135) comprises creating a digital dataset double (121) from component model datasets (114, ..., NN) taking into account customer-specific configuration data (113), and creating manufacturing data by modifying the digital dataset double (121) taking into account production-specific data (136).

12. Apparatus (1) for monitoring a state of a physical passenger transport system (2), **characterized in that** the apparatus comprises:
• a UDDD (102) constructed from component model datasets (114 - NN), which UDDD reproduces characterizing properties of components of the physical passenger transport system (2) in an actual configuration of the physical passenger transport system (2) in a machine-processable manner after the assembly and installation thereof in a structure (5); and
• at least one detection device (200), by means of which a load profile (70) of a conveyor belt (7) of the passenger transport system (2) can be detected during operation;
• it being possible for this load profile (70) to be transferred to the UDDD (102) as measurement data for the purpose of updating existing data, and it being possible for characterizing properties of the component model datasets (114 - NN) affected by the transmitted measurement data to be redetermined using a set of rules (80) and for these characterizing properties to be updated with the redetermined characterizing properties;
and, by means of static and dynamic simulations on the UDDD (102), the changes and change trends in the characterizing properties of the circulating virtual conveyor belt (107) of the UDDD and the effects on virtual components (129, 132) of the passenger transport system interacting with this component (107) can be tracked and evaluated.

13. Physical passenger transport system (2) comprising an apparatus (1) according to claim 12.

14. Computer program product (101) comprising machine-readable program instructions (166) which, when executed on a programmable apparatus (50, 111), cause the apparatus (50, 111) to carry out or control a method (100) according to any of claims 1 to 11.

15. Computer-readable medium having a computer program product (101) according to claim 14 stored thereon.

## Revendications

1. Procédé (100) de surveillance d'un état d'une installation de transport de personnes (2) physique à l'aide d'un jeu de données de double numérique actualisé, ADDD (102) qui comprend des propriétés caractéristiques d'éléments structuraux de l'installation de transport de personnes (2) physique d'une manière pouvant être traitée par machine, dans lequel
• l'installation de transport de personnes (2) physique présente une bande transporteuse (7) rotative ;
• l'ADDD (102) est construit à partir de jeux de données de modèles d'éléments structuraux (114 - NN) comprenant des données déterminées par la mesure de propriétés caractéristiques au niveau de l'installation de transport de personnes (2) physique après son assemblage et son installation dans un édifice (5) ;
• l'installation de transport de personnes (2) physique présente également au moins un appareil de détection (200) qui détecte un profil de charge (70) de la bande transporteuse (7, 11, 31, 36) pendant le fonctionnement ;
• ledit profil de charge (70) est transmis en tant que données de mesure à l'ADDD (102) et, à l'aide d'un jeu de règles (80), des propriétés caractéristiques des jeux de données de modèles d'éléments structuraux (114 - NN) concernés par les données de mesure transmises sont à nouveau déterminées ;
• puis les propriétés caractéristiques des jeux de données de modèles d'éléments structuraux (114 - NN) concernés sont actualisés avec les propriétés caractéristiques déterminées à nouveau ;
et, au moyen de la surveillance, des modifications et des tendances de modification des propriétés caractéristiques actualisées de la bande transporteuse (7) rotative et leur influence sur les éléments structuraux de la bande transporteuse (7) et sur les éléments structuraux en interaction avec lesdits éléments structuraux sont suivies et évaluées au moyen de l'ADDD (102) par des calculs et/ou par des simulations statiques et dynamiques.

2. Procédé (100) selon la revendication 1, dans lequel le profil de charge (70) détecté par l'appareil de détection (200) représente la puissance d'entraînement fournie par la machine d'entraînement (33) pendant le temps de fonctionnement et est calculé à partir du profil de courant (U) détecté et du profil de tension (I) de la machine d'entraînement (33) en tenant compte de la température de la machine d'entraînement.

3. Procédé (100) selon la revendication 2, dans lequel le profil de charge (70) détecté est examiné pour des pics (73) apparaissant périodiquement et, lorsque des pics (37) se produisent, ceux-ci sont associés à un point sur la bande transporteuse (7).

4. Procédé (100) selon la revendication 1, dans lequel l'appareil de détection (200) est un capteur radar (76) ou une barrière lumineuse (77) par lequel des personnes entrant dans l'installation de transport de personnes (2) sont détectées, les personnes détectées étant converties en un profil de charge (70).

5. Procédé (100) selon la revendication 1, dans lequel l'appareil de détection (200) est un capteur de charge (75) disposé dans l'installation de transport de personnes (2) physique, au moyen duquel des charges transportées par l'installation de transport de personnes (2) sont détectées, celles-ci étant converties en un profil de charge (70).

6. Procédé (100) selon l'une des revendications précédentes, dans lequel, au moyen du jeu de règles (80), le profil de charge (70) est additionné ou intégré sur toute la durée de fonctionnement en une somme de charge (Y) et des valeurs d'usure correspondant à la somme de charge (Y) et basées sur des valeurs empiriques sont extraites pour les jeux de données de modèles d'éléments structuraux (114 - NN) concernés par le profil de charge (70), et des nouvelles propriétés caractéristiques prévues pour l'actualisation étant déterminées à l'aide de celles-ci, à partir des propriétés caractéristiques déterminées par mesure au niveau de l'installation de transport de personnes (2) physique après son assemblage et son installation dans un édifice (5).

7. Procédé (100) selon l'une des revendications précédentes, dans lequel les données de mesure transmises par l'appareil de détection (200) et/ou les propriétés caractéristiques déterminées à partir de celles-ci sont mémorisées avec une information temporelle (103) dans un fichier journal (104).

8. Procédé (100) selon la revendication 6, dans lequel, au moyen des données de mesure et/ou des propriétés caractéristiques mémorisées dans le fichier journal (104) ainsi que de données de fonctionnement mémorisées dans le fichier journal (104), l'on détermine au moyen de méthodes statistiques une tendance de modification des valeurs de mesure pour une charge de transport prédéfinie de la bande transporteuse (2) et/ou des propriétés caractéristiques.

9. Procédé (100) selon l'une des revendications précédentes, dans lequel la surveillance de l'état de l'installation de transport de personnes (2) physique comprend une simulation de propriétés caractéristiques futures de l'installation de transport de personnes (2) physique à l'aide de l'ADDD (102).

10. Procédé (100) selon l'une des revendications précédentes, comprenant en outre la création de l'ADDD (102) ;
la création de l'ADDD (102) comprenant :
• la création d'un jeu de données de double numérique de mise en service (135) comportant des données de consigne qui reproduisent des propriétés caractéristiques d'éléments structuraux de l'installation de transport de personnes (2) dans une configuration de consigne ;
• la création d'un jeu de données de double numérique d'achèvement sur la base du jeu de données de double numérique de mise en service (135) par la mesure de données réelles reproduisant des propriétés caractéristiques d'éléments structuraux de l'installation de transport de personnes (2) physique dans la configuration réelle de l'installation de transport de personnes (2) immédiatement après son assemblage et son installation dans un édifice (5) et par le remplacement de données de consigne dans le jeu de données de double numérique de mise en service (135) par des données réelles correspondantes ; et
• la création de l'ADDD (102) sur la base du jeu de données de double numérique d'achèvement par l'actualisation du jeu de données de double numérique d'achèvement pendant le fonctionnement de l'installation de transport de personnes (2) physique en tenant compte du profil de charge (70) détecté par l'appareil de détection (200).

11. Procédé (100) selon la revendication 10, dans lequel la création du jeu de données de double numérique de mise en service (135) comprend la création d'un jeu de données de double numérique (121) à partir de jeux de données de modèles d'éléments structuraux (114, ..., NN) en tenant compte de données de configuration spécifiques au client (113), ainsi que la création de données de fabrication par la modification du jeu de données de double numérique (121) en tenant compte de données spécifiques à la production (136).

12. Dispositif (1) de surveillance d'un état d'une installation de transport de personnes (2) physique, **caractérisé en ce que** le dispositif comprend :
• un ADDD (102) construit à partir de jeux de données de modèles d'éléments structuraux (114 - NN) qui reproduit des propriétés caractéristiques d'éléments structuraux de l'installation de transport de personnes (2) physique dans une configuration réelle de l'installation de transport de personnes (2) physique après son assemblage et son installation dans un édifice (5) d'une manière pouvant être traitée par machine ; et
• au moins un appareil de détection (200) au moyen duquel un profil de charge (70) d'une bande transporteuse (7) de l'installation de transport de personnes (2) peut être détecté pendant le fonctionnement ;
• dans lequel ledit profil de charge (70) peut être transmis à l'ADDD (102) en tant que données de mesure en vue de l'actualisation de données existantes, et dans lequel des propriétés caractéristiques des jeux de données de modèles d'éléments structuraux (114 - NN) concernés par les données de mesure transmises peuvent être déterminées à nouveau à l'aide d'un jeu de règles (80) et lesdits jeux de données peuvent être actualisés à l'aide des propriétés caractéristiques à nouveau déterminées ; et, au moyen de simulations statiques et dynamiques sur l'ADDD (102), les modifications et les tendances de modification des propriétés caractéristiques de sa bande transporteuse (107) virtuelle rotative et les effets sur des éléments structuraux (129, 132) virtuels de l'installation de transport de personnes en interaction avec ledit élément structural (107) peuvent être suivis et évalués.

13. Installation de transport de personnes (2) physique, comprenant un dispositif (1) conformément à la revendication 12.

14. Produit programme informatique (101), comprenant des instructions de programme lisibles par machine (166), lesquelles, lorsqu'elles sont exécutées sur un dispositif (50, 111) programmable, amènent le dispositif (50, 111) à effectuer ou à commander un procédé (100) conformément à l'une des revendications 1 à 11.

15. Support lisible par ordinateur sur lequel est stocké un produit programme informatique (101) conformément à la revendication 14.
